# EUROPEAN PATENT APPLICATION

(11) **EP 3 322 240 A1**
(43) Date of publication of application: **16.05.2018**
(21) Application number: 15900076.9
(22) Date of filing: 06.08.2015
(51) Int. Cl.: H04W 72/04

(54) **METHOD AND APPARATUS FOR ESTABLISHING DATA RADIO BEARER**

(71) Applicant: Huawei Technologies Co., Ltd., Longgang District Shenzhen, Guangdong 518129 (CN)
(72) Inventor: QUAN, Wei, Shenzhen Guangdong 518129 (CN); LI, Bingzhao, Shenzhen Guangdong 518129 (CN); ZHANG, Jian, Shenzhen Guangdong 518129 (CN); MIAO, Jinhua, Shenzhen Guangdong 518129 (CN); TANG, Xun, Shenzhen Guangdong 518129 (CN); YANG, Xiaodong, Shenzhen Guangdong 518129 (CN)
(74) Representative: Pfenning, Meinig & Partner mbB
(86) International application number: PCT/CN2015/086279
(87) International publication number: WO 2017/020302

(57) **Abstract**

A data radio bearer establishment method is provided, and includes: sending, by user equipment, an RRC message, where the RRC message carries an instruction identifier, and the instruction identifier is used to instruct to establish a data radio bearer between the user equipment and an access network device; receiving, by the user equipment, a data radio bearer configuration parameter, where the data radio bearer configuration parameter is sent according to the instruction identifier; and establishing, by the user equipment, the data radio bearer between the user equipment and the access network device according to the data radio bearer configuration parameter. In the solution, the RRC message carries the preset identifier, the data radio bearer configuration parameter is received after the RRC message is sent, and the data radio bearer is established according to the data radio bearer configuration parameter. Therefore, a prior-art disadvantage that a relatively long time is consumed and efficiency is relatively low in a data radio bearer establishment process is resolved.

## Description

### TECHNICAL FIELD

The present invention relates to the field of communications technologies, and in particular, to a data radio bearer establishment method and an apparatus.

### BACKGROUND

With development of communications technologies, globally, there will be in total hundreds of billions of devices connected to a mobile communications network. It is predicted that by 2020, there will be more than ten billion mobile terminals (excluding Internet of Things devices) globally, and there will be more than two billion mobile terminals in China. As the terminals increase, to reduce a transmission relay in a data transmission process is a problem to be urgently resolved.

Currently, if the terminal needs to send or receive data when being in an idle state, the terminal needs to first establish a related bearer, and then send or receive data by using the related bearer. A specific process is as follows.
Step a: Establish an RRC (Radio Resource Control, radio resource control) connection in an idle state, to enter an RRC connected state, that is, establish a signaling bearer.
Step b: Transmit an RRC message by using the established signaling bearer, to establish a data bearer.
Step c: Send or receive data by using the established data bearer.

If the terminal moves in the connected state, the terminal performs a cell handover.

Further, after step c, the terminal may execute an RRC connection release process when the terminal has no data to send or receive, and then the terminal returns to the idle state.

Further, when the terminal needs to send or receive data again, the terminal executes the foregoing process again.

With rapid increase in terminals, a volume of data transmitted by the terminal also increases explosively. If transmission is still performed in the foregoing manner, a relatively long time is consumed and efficiency is relatively low.

### SUMMARY

Embodiments of the present invention provide a data radio bearer establishment method and an apparatus, to resolve a prior-art disadvantage that a relatively long time is consumed and efficiency is relatively low in a communication process.

According to a first aspect, user equipment is provided, including:
a sending module, configured to send a radio resource control RRC message, where the RRC message carries an instruction identifier, and the instruction identifier is used to instruct to establish a data radio bearer between the user equipment and an access network device;
a receiving module, configured to receive a data radio bearer configuration parameter, where the data radio bearer configuration parameter is sent according to the instruction identifier; and
a processing module, configured to establish the data radio bearer between the user equipment and the access network device according to the data radio bearer configuration parameter.

With reference to the first aspect, in a first possible implementation, the user equipment further includes a determining module, configured to determine a first signaling radio bearer configuration parameter, where
the processing module is further configured to establish a signaling radio bearer between the user equipment and the access network device according to the first signaling radio bearer configuration parameter; and
that the receiving module receives the data radio bearer configuration parameter is specifically:
receiving the data radio bearer configuration parameter by using the signaling radio bearer.

With reference to the first possible implementation of the first aspect, in a second possible implementation, that the sending module sends the RRC message is specifically:
sending the RRC message by using the signaling radio bearer.

With reference to the first or the second possible implementation of the first aspect, in a third possible implementation, that the determining module determines the first signaling radio bearer configuration parameter is specifically:
obtaining the first signaling radio bearer configuration parameter in a pre-write manner; or
the receiving module is further configured to receive a system broadcast message, and the determining module obtains the first signaling radio bearer configuration parameter from the system broadcast message; or
using, as the first signaling radio bearer configuration parameter, a signaling radio bearer configuration parameter used for previously establishing a signaling radio bearer; or
obtaining the first signaling radio bearer configuration parameter from a previously received RRC connection release message.

With reference to the first to the third possible implementations of the first aspect, in a fourth possible implementation, the receiving module is further configured to receive a second signaling radio bearer configuration parameter; and
the processing module is further configured to change the first signaling radio bearer configuration parameter according to the second signaling radio bearer configuration parameter.

With reference to the first to the fourth possible implementations of the first aspect, in a fifth possible implementation, a logical channel LCH corresponding to the signaling radio bearer is a common control channel CCCH or a dedicated control channel DCCH.

With reference to the fifth possible implementation of the first aspect, in a sixth possible implementation, Radio Link Control RLC in a transparent mode, or RLC in an unacknowledged mode, or RLC in an acknowledged mode is used for the signaling radio bearer.

With reference to the fifth or the sixth possible implementation of the first aspect, in a seventh possible implementation, when the LCH corresponding to the signaling radio bearer is the DCCH, the first signaling radio bearer configuration parameter and the second signaling radio bearer configuration parameter each include at least one of a Packet Data Convergence Protocol PDCP configuration parameter, an RLC configuration parameter, a Media Access Control MAC configuration parameter, or a physical layer configuration parameter.

With reference to the first aspect, or the first to the seventh possible implementations of the first aspect, in an eighth possible implementation, the user equipment further includes the determining module, configured to determine that a cell in which the user equipment is currently located supports a function of quickly establishing a data radio bearer.

With reference to the first aspect, or the first to the eighth possible implementations of the first aspect, in a ninth possible implementation, the instruction identifier is one or any combination of a non-access stratum NAS service request message, a cause value of quickly establishing a data bearer, or a logical channel identifier LCID.

With reference to the first aspect, or the first to the ninth possible implementations of the first aspect, in a tenth possible implementation, the sending module is further configured to send a random access code;
the receiving module is further configured to receive a random access response, where the random access response is sent according to the random access code, and the random access response carries a resource configuration parameter;
the determining module is further configured to determine a radio resource according to the resource configuration parameter; and
the sending module is further configured to send the RRC message by using the radio resource.

With reference to the tenth possible implementation of the first aspect, in an eleventh possible implementation, the user equipment further includes the determining module, configured to: determine a physical random access channel PRACH resource configuration parameter corresponding to the random access code, and determine a PRACH resource corresponding to the PRACH resource configuration parameter; and
the sending module is further configured to send the random access code by using the determined PRACH resource.

According to a second aspect, an access network device is provided, including:
a receiving module, configured to receive a radio resource control RRC message, where the RRC message carries an instruction identifier, and the instruction identifier is used to instruct to establish a data radio bearer between user equipment and the access network device; and
a sending module, configured to send a data radio bearer configuration parameter according to the instruction identifier, where the data radio bearer configuration parameter is used to establish the data radio bearer between the user equipment and the access network device.

With reference to the second aspect, in a first possible implementation, the receiving module is further configured to receive quality of service QoS information of the data radio bearer; and
the access network device further includes a generation module, configured to generate the data radio bearer configuration parameter according to the QoS information.

With reference to the first possible implementation of the second aspect, in a second possible implementation, that the receiving module receives the QoS information of the data radio bearer is specifically:
generating an interface message according to the RRC message, where the interface message carries the instruction identifier;
sending the interface message; and
receiving the QoS information, where the QoS information is sent according to the interface message.

With reference to the second aspect, or the first or the second possible implementation of the second aspect, in a third possible implementation, the sending module is further configured to: send a system broadcast message, where the system broadcast carries a first signaling radio bearer configuration parameter, and the first signaling radio bearer configuration parameter is used to establish a signaling radio bearer between the user equipment and the access network device; and/or
send an RRC connection release message, where the RRC connection release message carries the first signaling radio bearer configuration parameter.

With reference to the second aspect, or the first to the third possible implementations of the second aspect, in a fourth possible implementation, the sending module is further configured to send a second signaling radio bearer configuration parameter.

With reference to the third or the fourth possible implementation of the second aspect, in a fifth possible implementation, a logical channel LCH corresponding to the signaling radio bearer is a common control channel CCCH or a dedicated control channel DCCH.

With reference to the fifth possible implementation of the second aspect, in a sixth possible implementation, Radio Link Control RLC in a transparent mode, or RLC in an unacknowledged mode, or RLC in an acknowledged mode is used for the signaling radio bearer.

With reference to the fifth or the sixth possible implementation of the second aspect, in a seventh possible implementation, when the LCH corresponding to the signaling radio bearer is the DCCH, the first signaling radio bearer configuration parameter and the second signaling radio bearer configuration parameter each include at least one of a Packet Data Convergence Protocol PDCP configuration parameter, an RLC configuration parameter, a Media Access Control MAC configuration parameter, or a physical layer configuration parameter.

With reference to the second aspect, or the first to the seventh possible implementations of the second aspect, in an eighth possible implementation, the instruction identifier is one or any combination of a non-access stratum NAS service request message, a cause value of quickly establishing a data bearer, or a logical channel identifier LCID.

With reference to the second aspect, or the first to the eighth possible implementations of the second aspect, in a ninth possible implementation, the receiving module is further configured to receive a random access code; and
the sending module is further configured to send a random access response according to the random access code, where the access response carries a resource configuration parameter.

According to a third aspect, an access network device is provided, including:
a sending module, configured to send an interface message, where the interface message carries an instruction identifier, and the instruction identifier is used to instruct to establish a data radio bearer between user equipment and the access network device; and
a receiving module, configured to receive quality of service QoS information of the data radio bearer, where the QoS information is returned according to the interface message.

With reference to the third aspect, in a first possible implementation, the access network device further includes a generation module, configured to generate a data radio bearer configuration parameter according to the QoS information; and
the sending module is further configured to send the data radio bearer configuration parameter.

With reference to the third aspect or the first possible implementation of the third aspect, in a second possible implementation, the receiving module is further configured to receive an RRC message, where the RRC message carries the instruction identifier; and
the access network device further includes the generation module, configured to generate the interface message according to the RRC message.

With reference to the third aspect, or the first or the second possible implementation of the third aspect, in a third possible implementation, the sending module is further configured to: send a system broadcast message, where the system broadcast carries a first signaling radio bearer configuration parameter, and the first signaling radio bearer configuration parameter is used to establish a signaling radio bearer between the user equipment and the access network device; and/or
send an RRC connection release message, where the RRC connection release message carries the first signaling radio bearer configuration parameter.

With reference to the third aspect, or the first to the third possible implementations of the third aspect, in a fourth possible implementation, the sending module is further configured to send a second signaling radio bearer configuration parameter.

With reference to the third or the fourth possible implementation of the third aspect, in a fifth possible implementation, a logical channel LCH corresponding to the signaling radio bearer is a common control channel CCCH or a dedicated control channel DCCH.

With reference to the fifth possible implementation of the third aspect, in a sixth possible implementation, Radio Link Control RLC in a transparent mode, or RLC in an unacknowledged mode, or RLC in an acknowledged mode is used for the signaling radio bearer.

With reference to the fifth or the sixth possible implementation of the third aspect, in a seventh possible implementation, when the LCH corresponding to the signaling radio bearer is the DCCH, the first signaling radio bearer configuration parameter and the second signaling radio bearer configuration parameter each include at least one of a Packet Data Convergence Protocol PDCP configuration parameter, an RLC configuration parameter, a Media Access Control MAC configuration parameter, or a physical layer configuration parameter.

With reference to the third aspect, or the first to the seventh possible implementations of the third aspect, in an eighth possible implementation, the instruction identifier is one or any combination of a non-access stratum NAS service request message, a cause value of quickly establishing a data bearer, or a logical channel identifier LCID.

With reference to the third aspect, or the first to the eighth possible implementations of the third aspect, in a ninth possible implementation, the receiving module is further configured to receive a random access code; and
the sending module is further configured to send a random access response according to the random access code, where the access response carries a resource configuration parameter.

According to a fourth aspect, a core network device is provided, including:
a receiving module, configured to receive an interface message, where the interface message carries an instruction identifier, and the instruction identifier is used to instruct to establish a data radio bearer between user equipment and an access network device; and
a sending module, configured to send quality of service QoS information of the data radio bearer, where the QoS information is sent according to the interface message.

With reference to the fourth aspect, in a first possible implementation, the instruction identifier is one or any combination of a non-access stratum NAS service request message, a cause value of quickly establishing a data bearer, or a logical channel identifier LCID.

According to a fifth aspect, a data radio bearer establishment method is provided, including:
sending, by user equipment, a radio resource control RRC message, where the RRC message carries an instruction identifier, and the instruction identifier is used to instruct to establish a data radio bearer between the user equipment and an access network device;
receiving, by the user equipment, a data radio bearer configuration parameter, where the data radio bearer configuration parameter is sent according to the instruction identifier; and
establishing, by the user equipment, the data radio bearer between the user equipment and the access network device according to the data radio bearer configuration parameter.

With reference to the fifth aspect, in a first possible implementation, before the receiving, by the user equipment, a data radio bearer configuration parameter, the method further includes:
determining, by the user equipment, a first signaling radio bearer configuration parameter; and
establishing, by the user equipment, a signaling radio bearer between the user equipment and the access network device according to the first signaling radio bearer configuration parameter; and
the receiving, by the user equipment, a data radio bearer configuration parameter includes:
   receiving, by the user equipment, the data radio bearer configuration parameter by using the signaling radio bearer.

With reference to the first possible implementation of the fifth aspect, in a second possible implementation, the sending, by user equipment, an RRC message includes:
sending, by the user equipment, the RRC message by using the signaling radio bearer.

With reference to the first or the second possible implementation of the fifth aspect, in a third possible implementation, the determining, by the user equipment, a first signaling radio bearer configuration parameter includes:
obtaining, by the user equipment, the first signaling radio bearer configuration parameter in a pre-write manner; or
receiving, by the user equipment, a system broadcast message, and obtaining the first signaling radio bearer configuration parameter from the system broadcast message; or
using, by the user equipment as the first signaling radio bearer configuration parameter, a signaling radio bearer configuration parameter used for previously establishing a signaling radio bearer; or
obtaining, by the user equipment, the first signaling radio bearer configuration parameter from a previously received RRC connection release message.

With reference to the first to the third possible implementations of the fifth aspect, in a fourth possible implementation, after the sending, by user equipment, an RRC message, the method further includes:
receiving, by the user equipment, a second signaling radio bearer configuration parameter; and
after the user equipment determines the first signaling radio bearer configuration parameter and establishes the signaling radio bearer, the method further includes:
   changing, by the user equipment, the first signaling radio bearer configuration parameter according to the second signaling radio bearer configuration parameter.

With reference to the first to the fourth possible implementations of the fifth aspect, in a fifth possible implementation, a logical channel LCH corresponding to the signaling radio bearer is a common control channel CCCH or a dedicated control channel DCCH.

With reference to the fifth possible implementation of the fifth aspect, in a sixth possible implementation, Radio Link Control RLC in a transparent mode, or RLC in an unacknowledged mode, or RLC in an acknowledged mode is used for the signaling radio bearer.

With reference to the fifth or the sixth possible implementation of the fifth aspect, in a seventh possible implementation, when the LCH corresponding to the signaling radio bearer is the DCCH, the first signaling radio bearer configuration parameter and the second signaling radio bearer configuration parameter each include at least one of a Packet Data Convergence Protocol PDCP configuration parameter, an RLC configuration parameter, a Media Access Control MAC configuration parameter, or a physical layer configuration parameter.

With reference to the fifth aspect, or the first to the seventh possible implementations of the fifth aspect, in an eighth possible implementation, before the sending, by user equipment, an RRC message, the method further includes:
determining, by the user equipment, that a cell in which the user equipment is currently located supports a function of quickly establishing a data radio bearer.

With reference to the fifth aspect, or the first to the eighth possible implementations of the fifth aspect, in a ninth possible implementation, the instruction identifier is one or any combination of a non-access stratum NAS service request message, a cause value of quickly establishing a data bearer, or a logical channel identifier LCID.

With reference to the fifth aspect, or the first to the ninth possible implementations of the fifth aspect, in a tenth possible implementation, before the sending, by user equipment, an RRC message, the method further includes:
sending, by the user equipment, a random access code;
receiving, by the user equipment, a random access response, where the random access response is sent according to the random access code, and the random access response carries a resource configuration parameter;
determining, by the user equipment, a radio resource according to the resource configuration parameter; and
sending, by the user equipment, the RRC message by using the radio resource.

With reference to the tenth possible implementation of the fifth aspect, in an eleventh possible implementation, before the sending, by the user equipment, a random access code, the method further includes:
determining, by the user equipment, a physical random access channel PRACH resource configuration parameter corresponding to the random access code;
determining, by the user equipment, a PRACH resource corresponding to the PRACH resource configuration parameter; and
sending, by the user equipment, the random access code by using the determined PRACH resource.

According to a sixth aspect, a data radio bearer establishment method is provided, including:
receiving, by an access network device, a radio resource control RRC message, where the RRC message carries an instruction identifier, and the instruction identifier is used to instruct to establish a data radio bearer between user equipment and the access network device; and
sending, by the access network device, a data radio bearer configuration parameter according to the instruction identifier, where the data radio bearer configuration parameter is used to establish the data radio bearer between the user equipment and the access network device.

With reference to the sixth aspect, in a first possible implementation, after the receiving, by an access network device, an RRC message, before the sending, by the access network device, a data radio bearer configuration parameter according to the instruction identifier, the method further includes:
receiving, by the access network device, quality of service QoS information of the data radio bearer; and
generating, by the access network device, the data radio bearer configuration parameter according to the QoS information.

With reference to the first possible implementation of the sixth aspect, in a second possible implementation, the receiving, by the access network device, QoS information of the data radio bearer includes:
generating, by the access network device, an interface message according to the RRC message, where the interface message carries the instruction identifier;
sending, by the access network device, the interface message; and
receiving, by the access network device, the QoS information, where the QoS information is sent according to the interface message.

With reference to the sixth aspect, or the first or the second possible implementation of the sixth aspect, in a third possible implementation, before the receiving, by an access network device, an RRC message, the method further includes:
sending, by the access network device, a system broadcast message, where the system broadcast carries a first signaling radio bearer configuration parameter, and the first signaling radio bearer configuration parameter is used to establish a signaling radio bearer between the user equipment and the access network device; and/or
sending, by the access network device, an RRC connection release message, where the RRC connection release message carries the first signaling radio bearer configuration parameter.

With reference to the sixth aspect, or the first to the third possible implementations of the sixth aspect, in a fourth possible implementation, after the receiving, by an access network device, an RRC message, the method further includes:
sending, by the access network device, a second signaling radio bearer configuration parameter.

With reference to the third or the fourth possible implementation of the sixth aspect, in a fifth possible implementation, a logical channel LCH corresponding to the signaling radio bearer is a common control channel CCCH or a dedicated control channel DCCH.

With reference to the fifth possible implementation of the sixth aspect, in a sixth possible implementation, Radio Link Control RLC in a transparent mode, or RLC in an unacknowledged mode, or RLC in an acknowledged mode is used for the signaling radio bearer.

With reference to the fifth or the sixth possible implementation of the sixth aspect, in a seventh possible implementation, when the LCH corresponding to the signaling radio bearer is the DCCH, the first signaling radio bearer configuration parameter and the second signaling radio bearer configuration parameter each include at least one of a Packet Data Convergence Protocol PDCP configuration parameter, an RLC configuration parameter, a Media Access Control MAC configuration parameter, or a physical layer configuration parameter.

With reference to the sixth aspect, or the first to the seventh possible implementations of the sixth aspect, in an eighth possible implementation, the instruction identifier is one or any combination of a non-access stratum NAS service request message, a cause value of quickly establishing a data bearer, or a logical channel identifier LCID.

With reference to the sixth aspect, or the first to the eighth possible implementations of the sixth aspect, in a ninth possible implementation, before the receiving, by an access network device, an RRC message, the method further includes:
receiving, by the access network device, a random access code; and
sending, by the access network device, a random access response according to the random access code, where the access response carries a resource configuration parameter.

According to a seventh aspect, a data radio bearer establishment method is provided, including:
sending, by an access network device, an interface message, where the interface message carries an instruction identifier, and the instruction identifier is used to instruct to establish a data radio bearer between user equipment and the access network device; and
receiving, by the access network device, quality of service QoS information of the data radio bearer, where the QoS information is returned according to the interface message.

With reference to the seventh aspect, in a first possible implementation, after the receiving, by the access network device, QoS information, the method further includes:
generating, by the access network device, a data radio bearer configuration parameter according to the QoS information, and sending the data radio bearer configuration parameter.

With reference to the seventh aspect or the first possible implementation of the seventh aspect, in a second possible implementation, before the sending, by an access network device, an interface message, the method further includes:
receiving, by the access network device, an RRC message, where the RRC message carries the instruction identifier; and
generating, by the access network device, the interface message according to the RRC message.

With reference to the seventh aspect, or the first or the second possible implementation of the seventh aspect, in a third possible implementation, before the receiving, by the access network device, an RRC message, the method further includes:
sending, by the access network device, a system broadcast message, where the system broadcast carries a first signaling radio bearer configuration parameter, and the first signaling radio bearer configuration parameter is used to establish a signaling radio bearer between the user equipment and the access network device; and/or
sending, by the access network device, an RRC connection release message, where the RRC connection release message carries the first signaling radio bearer configuration parameter.

With reference to the seventh aspect, or the first to the third possible implementations of the seventh aspect, in a fourth possible implementation, after the receiving, by the access network device, an RRC message, the method further includes:
sending, by the access network device, a second signaling radio bearer configuration parameter.

With reference to the third or the fourth possible implementation of the seventh aspect, in a fifth possible implementation, a logical channel LCH corresponding to the signaling radio bearer is a common control channel CCCH or a dedicated control channel DCCH.

With reference to the fifth possible implementation of the seventh aspect, in a sixth possible implementation, Radio Link Control RLC in a transparent mode, or RLC in an unacknowledged mode, or RLC in an acknowledged mode is used for the signaling radio bearer.

With reference to the fifth or the sixth possible implementation of the seventh aspect, in a seventh possible implementation, when the LCH corresponding to the signaling radio bearer is the DCCH, the first signaling radio bearer configuration parameter and the second signaling radio bearer configuration parameter each include at least one of a Packet Data Convergence Protocol PDCP configuration parameter, an RLC configuration parameter, a Media Access Control MAC configuration parameter, or a physical layer configuration parameter.

With reference to the seventh aspect, or the first to the seventh possible implementations of the seventh aspect, in an eighth possible implementation, the instruction identifier is one or any combination of a non-access stratum NAS service request message, a cause value of quickly establishing a data bearer, or a logical channel identifier LCID.

With reference to the seventh aspect, or the first to the eighth possible implementations of the seventh aspect, in a ninth possible implementation, before the receiving, by the access network device, an RRC message, the method further includes:
receiving, by the access network device, a random access code; and
sending, by the access network device, a random access response according to the random access code, where the access response carries a resource configuration parameter.

According to an eighth aspect, a data radio bearer establishment method is provided, including:
receiving, by a core network device, an interface message, where the interface message carries an instruction identifier, and the instruction identifier is used to instruct to establish a data radio bearer between user equipment and an access network device; and
sending, by the core network device, quality of service QoS information of the data radio bearer, where the QoS information is sent according to the interface message.

With reference to the eighth aspect, in a first possible implementation, the instruction identifier is one or any combination of a non-access stratum NAS service request message, a cause value of quickly establishing a data bearer, or a logical channel identifier LCID.

In the prior art, an RRC message sent to an access network device does not carry a preset identifier, a signaling radio bearer configuration parameter sent by the access network device is received, a signaling radio bearer is established according to the signaling radio bearer configuration parameter, and then a data radio bearer is established according to the signaling radio bearer. In the data radio bearer establishment method provided in the embodiments of the present invention, the user equipment sends the RRC message, where the RRC message carries the instruction identifier, and the instruction identifier is used to instruct to establish the data radio bearer between the user equipment and the access network device; the user equipment receives the data radio bearer configuration parameter, where the data radio bearer configuration parameter is sent according to the instruction identifier; and the user equipment establishes the data radio bearer between the user equipment and the access network device according to the data radio bearer configuration parameter. In the solution, the RRC message carries the preset identifier, the data radio bearer configuration parameter is received after the RRC message is sent, and the data radio bearer is established according to the data radio bearer configuration parameter. Therefore, a prior-art disadvantage that a relatively long time is consumed and efficiency is relatively low in a data radio bearer establishment process is resolved.

### BRIEF DESCRIPTION OF DRAWINGS

FIG. 1A is a schematic diagram of user equipment according to an embodiment of the present invention;
FIG. 1B is another schematic diagram of user equipment according to an embodiment of the present invention;
FIG. 2A is a schematic diagram of an access network device according to an embodiment of the present invention;
FIG. 2B is another schematic diagram of an access network device according to an embodiment of the present invention;
FIG. 3A is another schematic diagram of an access network device according to an embodiment of the present invention;
FIG. 3B is another schematic diagram of an access network device according to an embodiment of the present invention;
FIG. 4A is another schematic diagram of a core network device according to an embodiment of the present invention;
FIG. 4B is another schematic diagram of a core network device according to an embodiment of the present invention;
FIG. 5 is a schematic diagram of a data radio bearer establishment system according to an embodiment of the present invention;
FIG. 6 is a flowchart of data radio bearer establishment according to an embodiment of the present invention;
FIG. 7 is a flowchart of data radio bearer establishment according to an embodiment of the present invention;
FIG. 8 is a flowchart of data radio bearer establishment according to an embodiment of the present invention;
FIG. 9 is a flowchart of data radio bearer establishment according to an embodiment of the present invention; and
FIG. 10 is a flowchart of data radio bearer establishment according to an embodiment of the present invention.

### DESCRIPTION OF EMBODIMENTS

To make the objectives, technical solutions, and advantages of the present invention clearer, the following further describes the present invention in detail with reference to the accompanying drawings. Apparently, the described embodiments are merely some rather than all of the embodiments of the present invention. All other embodiments obtained by persons of ordinary skill in the art based on the embodiments of the present invention without creative efforts shall fall within the protection scope of the present invention.

In the following, preferred implementations of the present invention are described in detail with reference to the accompanying drawings. It should be understood that the preferred embodiments described herein are merely used to illustrate and explain the present invention, but are not intended to limit the present invention. In addition, the embodiments of this application and features in the embodiments may be mutually combined if they do not conflict with each other.

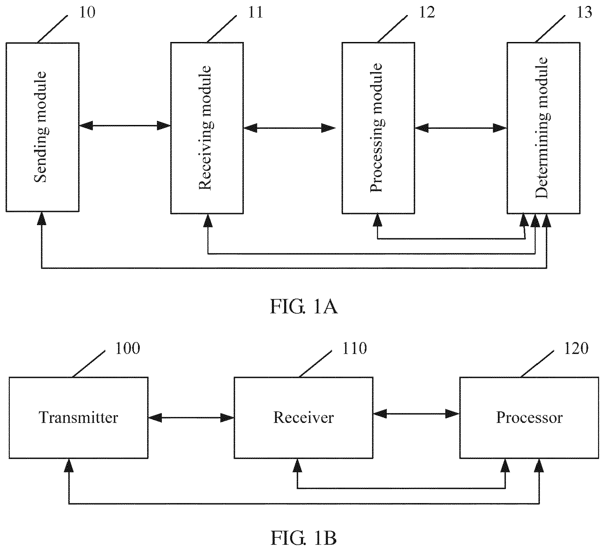

As shown in FIG. 1A, an embodiment of the present invention provides user equipment. The user equipment includes a sending module 10, a receiving module 11, and a processing module 12.

The sending module 10 is configured to send a radio resource control RRC message, where the RRC message carries an instruction identifier, and the instruction identifier is used to instruct to establish a data radio bearer between the user equipment and an access network device.

The receiving module 11 is configured to receive a data radio bearer configuration parameter, where the data radio bearer configuration parameter is sent according to the instruction identifier.

The processing module 12 is configured to establish the data radio bearer between the user equipment and the access network device according to the data radio bearer configuration parameter.

Because a signaling radio bearer needs to be used to establish the data radio bearer, the user equipment further includes a determining module 13, configured to determine a first signaling radio bearer configuration parameter.

The processing module 12 is further configured to establish a signaling radio bearer between the user equipment and the access network device according to the first signaling radio bearer configuration parameter.

That the receiving module 11 receives the data radio bearer configuration parameter is specifically:
receiving the data radio bearer configuration parameter by using the signaling radio bearer.

Optionally, that the sending module 10 sends the RRC message is specifically:
sending the RRC message by using the signaling radio bearer.

Optionally, that the determining module 13 determines the first signaling radio bearer configuration parameter is specifically:
obtaining the first signaling radio bearer configuration parameter in a pre-write manner; or
the receiving module 11 is further configured to receive a system broadcast message, and the determining module 13 obtains the first signaling radio bearer configuration parameter from the system broadcast message; or
using, as the first signaling radio bearer configuration parameter, a signaling radio bearer configuration parameter used for previously establishing a signaling radio bearer; or
obtaining the first signaling radio bearer configuration parameter from a previously received RRC connection release message.

When obtaining the first signaling radio bearer configuration parameter in the foregoing manner, the user equipment obtains the first signaling radio bearer configuration parameter without performing dedicated signaling interaction each time the user equipment establishes the data radio bearer between the user equipment and the access network device. Therefore, data radio bearer establishment efficiency is improved, and signaling overheads are reduced.

Performance of the signaling radio bearer established according to the first signaling radio bearer configuration parameter may deteriorate. Therefore, to improve the performance of the signaling radio bearer, the receiving module 11 is further configured to receive a second signaling radio bearer configuration parameter.

The processing module 12 is further configured to change the first signaling radio bearer configuration parameter according to the second signaling radio bearer configuration parameter.

In this way, performance of a signaling radio bearer established according to a changed first signaling radio bearer configuration parameter is higher than the performance of the signaling radio bearer established according to the unchanged first signaling radio bearer configuration parameter.

Optionally, a logical channel LCH corresponding to the signaling radio bearer is a common control channel CCCH or a dedicated control channel DCCH.

Optionally, Radio Link Control RLC in a transparent mode or RLC in an unacknowledged mode is used for the signaling radio bearer, or to improve reliability of the RRC message, RLC in an acknowledged mode may be used for the signaling radio bearer.

Optionally, when the LCH corresponding to the signaling radio bearer is the DCCH, the first signaling radio bearer configuration parameter and the second signaling radio bearer configuration parameter each may include at least one of a Packet Data Convergence Protocol PDCP configuration parameter, an RLC configuration parameter, a Media Access Control MAC configuration parameter, or a physical layer configuration parameter.

When a cell in which the user equipment is currently located does not support a function of establishing a data radio bearer, the user equipment does not quickly establish a data radio bearer even if the user equipment sends the RRC message that carries the instruction identifier. That is, after the user equipment sends the RRC message that carries the instruction identifier, the user equipment still first receives the signaling radio bearer configuration parameter and establishes the signaling radio bearer, and then receives the data radio bearer configuration parameter. Therefore, the user equipment further includes the determining module 13, configured to determine that the cell in which the user equipment is currently located supports the function of quickly establishing a data radio bearer.

The receiving module 11 is further configured to receive a system broadcast message. The determining module 13 determines, according to the system broadcast message, that the cell in which the user equipment is currently located supports the function of quickly establishing a data radio bearer.

Optionally, the instruction identifier is one or any combination of a non-access stratum NAS service request message, a cause value of quickly establishing a data bearer, or a logical channel identifier LCID.

A specific resource needs to be used to send the RRC message. Therefore, the sending module 10 is further configured to send a random access code.

The receiving module 11 is further configured to receive a random access response, where the random access response is sent according to the random access code, and the random access response carries a resource configuration parameter.

The determining module 13 is further configured to determine a radio resource according to the resource configuration parameter.

The sending module 10 is further configured to send the RRC message by using the radio resource.

A specific resource also needs to be used to send the random access code. Therefore, the user equipment further includes the determining module 13, configured to: determine a physical random access channel PRACH resource configuration parameter corresponding to the random access code, and determine a PRACH resource corresponding to the PRACH resource configuration parameter.

The sending module 10 is further configured to send the random access code by using the determined PRACH resource.

In this embodiment, the RRC message carries the preset identifier. After sending the RRC message, the user equipment directly receives the data radio bearer configuration parameter, and establishes the data radio bearer according to the data radio bearer configuration parameter without performing signaling radio bearer configuration parameter exchange each time. Therefore, a prior-art disadvantage that a relatively long time is consumed and efficiency is relatively low in a data radio bearer establishment process is resolved.

As shown in FIG. 1B, an embodiment of the present invention provides user equipment. The user equipment includes a transmitter 100, a receiver 110, and a processor 120.

The transmitter 100 is configured to send a radio resource control RRC message, where the RRC message carries an instruction identifier, and the instruction identifier is used to instruct to establish a data radio bearer between the user equipment and an access network device.

The receiver 110 is configured to receive a data radio bearer configuration parameter, where the data radio bearer configuration parameter is sent according to the instruction identifier.

The processor 120 is configured to establish the data radio bearer between the user equipment and the access network device according to the data radio bearer configuration parameter.

It should be noted that the transmitter 100 may further perform other operations performed by the sending module 10 shown in FIG. 1A, the receiver 110 may further perform other operations performed by the receiving module 11 shown in FIG. 1A, and the processor 120 may further perform other operations performed by the processing module 12 and operations performed by the determining module 13 shown in FIG. 1A.

In this embodiment, the RRC message carries the preset identifier. After sending the RRC message, the user equipment directly receives the data radio bearer configuration parameter, and establishes the data radio bearer according to the data radio bearer configuration parameter without performing signaling radio bearer configuration parameter exchange each time. Therefore, a prior-art disadvantage that a relatively long time is consumed and efficiency is relatively low in a data radio bearer establishment process is resolved.

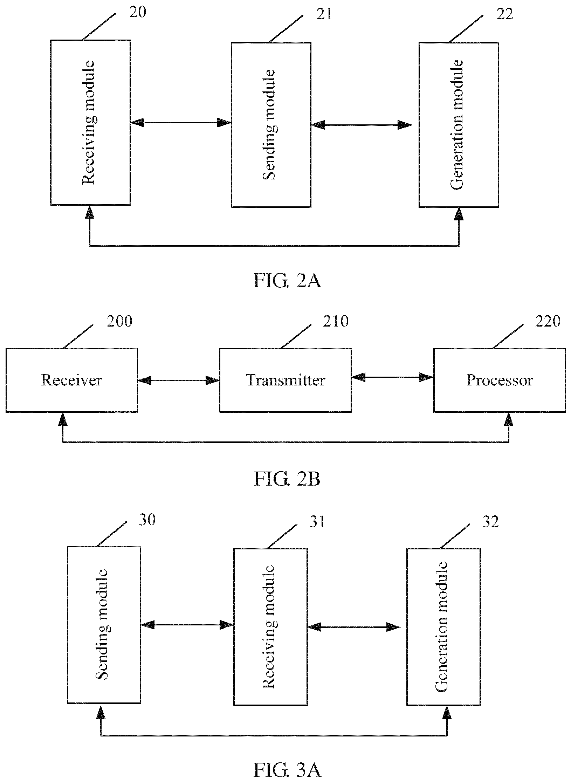

As shown in FIG. 2A, an embodiment of the present invention provides an access network device. The access network device includes a receiving module 20 and a sending module 21.

The receiving module 20 is configured to receive a radio resource control RRC message, where the RRC message carries an instruction identifier, and the instruction identifier is used to instruct to establish a data radio bearer between user equipment and the access network device.

The sending module 21 is configured to send a data radio bearer configuration parameter according to the instruction identifier, where the data radio bearer configuration parameter is used to establish the data radio bearer between the user equipment and the access network device.

A data radio bearer established according to QoS information has relatively high performance. Therefore, to improve performance of the established data radio bearer, the receiving module 20 is further configured to receive quality of service QoS information of the data radio bearer.

The access network device further includes a generation module 22, configured to generate the data radio bearer configuration parameter according to the QoS information.

In this way, the data radio bearer configuration parameter is generated according to the QoS information, and the data radio bearer is generated according to the data radio bearer configuration parameter. Therefore, the performance of the established data radio bearer is improved.

Optionally, that the receiving module 20 receives the QoS information of the data radio bearer is specifically:
generating an interface message according to the RRC message, where the interface message carries the instruction identifier;
sending the interface message; and
receiving the QoS information, where the QoS information is sent according to the interface message.

Optionally, the interface message may be an S1 interface message, or may be an X2 interface message. Certainly, the interface message may be another interface message according to different application scenarios or with development of communications technologies. This is not specifically limited herein.

The sending module 21 is further configured to: send a system broadcast message, where the system broadcast carries a first signaling radio bearer configuration parameter, and the first signaling radio bearer configuration parameter is used to establish a signaling radio bearer between the user equipment and the access network device; and/or
send an RRC connection release message, where the RRC connection release message carries the first signaling radio bearer configuration parameter.

In this way, the user equipment establishes the data radio bearer without performing signaling radio bearer configuration parameter exchange by using dedicated signaling each time. Therefore, data radio bearer establishment efficiency is improved, and signaling overheads are reduced.

Performance of the signaling radio bearer established according to the first signaling radio bearer configuration parameter may deteriorate. Therefore, to improve the performance of the signaling radio bearer, the sending module 21 is further configured to send a second signaling radio bearer configuration parameter.

Optionally, a logical channel LCH corresponding to the signaling radio bearer is a common control channel CCCH or a dedicated control channel DCCH.

Optionally, Radio Link Control RLC in a transparent mode or RLC in an unacknowledged mode is used for the signaling radio bearer, or to improve reliability of the RRC message, RLC in an acknowledged mode may be used for the signaling radio bearer.

Optionally, when the LCH corresponding to the signaling radio bearer is the DCCH, the first signaling radio bearer configuration parameter and the second signaling radio bearer configuration parameter each include at least one of a Packet Data Convergence Protocol PDCP configuration parameter, an RLC configuration parameter, a Media Access Control MAC configuration parameter, or a physical layer configuration parameter.

Optionally, the instruction identifier is one or any combination of a non-access stratum NAS service request message, a cause value of quickly establishing a data bearer, or a logical channel identifier LCID.

A specific resource needs to be used by the user equipment to send the RRC message. Therefore, the receiving module 20 is further configured to receive a random access code.

The sending module 21 is further configured to send a random access response according to the random access code, where the access response carries a resource configuration parameter.

In this case, when obtaining the resource configuration parameter, the user equipment may determine a radio resource, and send the RRC message by using the determined radio resource.

In this embodiment, the RRC message carries the preset identifier. After receiving the RRC message, the access network device directly sends the data radio bearer configuration parameter. The user equipment establishes the data radio bearer according to the data radio bearer configuration parameter. The access network device establishes the data radio bearer between the access network device and the user equipment without performing signaling radio bearer configuration parameter exchange each time. Therefore, a prior-art disadvantage that a relatively long time is consumed and efficiency is relatively low in a data radio bearer establishment process is resolved.

As shown in FIG. 2B, an embodiment of the present invention provides an access network device. The access network device includes a receiver 200 and a transmitter 210.

The receiver 200 is configured to receive a radio resource control RRC message, where the RRC message carries an instruction identifier, and the instruction identifier is used to instruct to establish a data radio bearer between user equipment and the access network device.

The transmitter 210 is configured to send a data radio bearer configuration parameter according to the instruction identifier, where the data radio bearer configuration parameter is used to establish the data radio bearer between the user equipment and the access network device.

It should be noted that the receiver 200 may further perform other operations performed by the receiving module 20 shown in FIG. 2A, and the transmitter 210 may further perform other operations performed by the sending module 21 shown in FIG. 2A.

The access network device may further include a processor 220, configured to perform other operations performed by the generation module 22 shown in FIG. 2A.

In this embodiment, the RRC message carries the preset identifier. After receiving the RRC message, the access network device directly sends the data radio bearer configuration parameter. The user equipment establishes the data radio bearer according to the data radio bearer configuration parameter. The access network device establishes the data radio bearer between the access network device and the user equipment without performing signaling radio bearer configuration parameter exchange each time. Therefore, a prior-art disadvantage that a relatively long time is consumed and efficiency is relatively low in a data radio bearer establishment process is resolved.

As shown in FIG. 3A, an embodiment of the present invention provides an access network device. The access network device includes a sending module 30 and a receiving module 31.

The sending module 30 is configured to send an interface message, where the interface message carries an instruction identifier, and the instruction identifier is used to instruct to establish a data radio bearer between user equipment and the access network device.

The receiving module 31 is configured to receive quality of service QoS information of the data radio bearer, where the QoS information is returned according to the interface message.

The access network device further includes a generation module 32, configured to generate a data radio bearer configuration parameter according to the QoS information.

The sending module 30 is further configured to send the data radio bearer configuration parameter.

The receiving module 31 is further configured to receive an RRC message, where the RRC message carries the instruction identifier.

The access network device further includes the generation module 32, configured to generate the interface message according to the RRC message.

Optionally, the interface message may be an S1 interface message, or may be an X2 interface message. Certainly, the interface message may be another interface message according to different application scenarios or with development of communications technologies. This is not specifically limited herein.

The sending module 30 is further configured to: send a system broadcast message, where the system broadcast carries a first signaling radio bearer configuration parameter, and the first signaling radio bearer configuration parameter is used to establish a signaling radio bearer between the user equipment and the access network device; and/or
send an RRC connection release message, where the RRC connection release message carries the first signaling radio bearer configuration parameter.

In this way, the user equipment establishes the data radio bearer without performing signaling radio bearer configuration parameter exchange by using dedicated signaling each time. Therefore, data radio bearer establishment efficiency is improved, and signaling overheads are reduced.

Performance of the signaling radio bearer established according to the first signaling radio bearer configuration parameter may deteriorate. Therefore, to improve the performance of the signaling radio bearer, the sending module 30 is further configured to send a second signaling radio bearer configuration parameter.

Optionally, a logical channel LCH corresponding to the signaling radio bearer is a common control channel CCCH or a dedicated control channel DCCH.

Optionally, Radio Link Control RLC in a transparent mode or RLC in an unacknowledged mode is used for the signaling radio bearer, or to improve reliability of the RRC message, RLC in an acknowledged mode may be used for the signaling radio bearer.

Optionally, when the LCH corresponding to the signaling radio bearer is the DCCH, the first signaling radio bearer configuration parameter and the second signaling radio bearer configuration parameter each may include at least one of a Packet Data Convergence Protocol PDCP configuration parameter, an RLC configuration parameter, a Media Access Control MAC configuration parameter, or a physical layer configuration parameter.

Optionally, the instruction identifier is one or any combination of a non-access stratum NAS service request message, a cause value of quickly establishing a data bearer, or a logical channel identifier LCID.

A specific resource needs to be used by the user equipment to send the RRC message. Therefore, the receiving module 31 is further configured to receive a random access code.

The sending module 30 is further configured to send a random access response according to the random access code, where the access response carries a resource configuration parameter.

In this case, when obtaining the resource configuration parameter, the user equipment may determine a radio resource, and send the RRC message by using the determined radio resource.

In this embodiment, the interface message carries the preset identifier. After sending the interface message, the access network device directly receives the QoS information instead of receiving the QoS information only after receiving a signaling radio bearer configuration parameter, and the access network device establishes the data radio bearer between the access network device and the user equipment without performing signaling radio bearer configuration parameter exchange each time. Therefore, a prior-art disadvantage that a relatively long time is consumed and efficiency is relatively low in a data radio bearer establishment process is resolved.

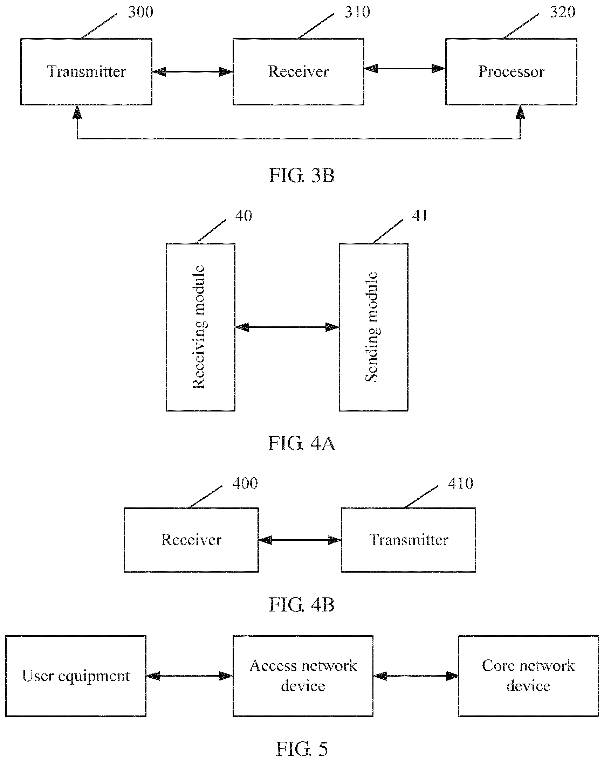

As shown in FIG. 3B, an embodiment of the present invention provides an access network device. The access network device includes a transmitter 300 and a receiver 310.

The transmitter 300 is configured to send an interface message, where the interface message carries an instruction identifier, and the instruction identifier is used to instruct to establish a data radio bearer between user equipment and the access network device.

The receiver 310 is configured to receive quality of service QoS information of the data radio bearer, where the QoS information is returned according to the interface message.

It should be noted that the transmitter 300 may further perform other operations performed by the sending module 30 shown in FIG. 3A, and the receiver 310 may further perform other operations performed by the receiving module 31 shown in FIG. 3A.

The access network device may further include a processor 320, configured to perform other operations performed by the generation module 32 shown in FIG. 3A.

In this embodiment of the present invention, optionally, the interface message may be an S1 interface message, or may be an X2 interface message. Certainly, the interface message may be another interface message according to different application scenarios or with development of communications technologies. This is not specifically limited herein.

In this embodiment, the interface message carries the preset identifier. After sending the interface message, the access network device directly receives the QoS information instead of receiving the QoS information only after receiving a signaling radio bearer configuration parameter, and the access network device establishes the data radio bearer between the access network device and the user equipment without performing signaling radio bearer configuration parameter exchange each time. Therefore, a prior-art disadvantage that a relatively long time is consumed and efficiency is relatively low in a data radio bearer establishment process is resolved.

As shown in FIG. 4A, an embodiment of the present invention provides a core network device. The core network device includes a receiving module 40 and a sending module 41.

The receiving module 40 is configured to receive an interface message, where the interface message carries an instruction identifier, and the instruction identifier is used to instruct to establish a data radio bearer between user equipment and an access network device.

The sending module 41 is configured to send quality of service QoS information of the data radio bearer, where the QoS information is sent according to the interface message.

Optionally, the instruction identifier is one or any combination of a non-access stratum NAS service request message, a cause value of quickly establishing a data bearer, or a logical channel identifier LCID.

Optionally, the interface message may be an S1 interface message, or may be an X2 interface message. Certainly, the interface message may be another interface message according to different application scenarios or with development of communications technologies. This is not specifically limited herein.

In this embodiment, the interface message carries the preset identifier. After receiving the interface message, the core network device directly sends the QoS information instead of sending the QoS information only after sending a signaling radio bearer configuration parameter and determining that a signaling radio bearer is established, and the core network device does not need to perform signaling radio bearer configuration parameter exchange each time the access network device establishes the data radio bearer between the access network device and the user equipment. Therefore, a prior-art disadvantage that a relatively long time is consumed and efficiency is relatively low in a data radio bearer establishment process is resolved.

As shown in FIG. 4B, an embodiment of the present invention provides a core network device. The core network device includes a receiver 400 and a transmitter 410.

The receiver 400 is configured to receive an interface message, where the interface message carries an instruction identifier, and the instruction identifier is used to instruct to establish a data radio bearer between user equipment and an access network device.

The transmitter 410 is configured to send quality of service QoS information of the data radio bearer, where the QoS information is sent according to the interface message.

Optionally, the instruction identifier is one or any combination of a non-access stratum NAS service request message, a cause value of quickly establishing a data bearer, or a logical channel identifier LCID.

Optionally, the interface message may be an S1 interface message, or may be an X2 interface message. Certainly, the interface message may be another interface message according to different application scenarios or with development of communications technologies. This is not specifically limited herein.

In this embodiment, the interface message carries the preset identifier. After receiving the interface message, the core network device directly sends the QoS information instead of sending the QoS information only after sending a signaling radio bearer configuration parameter and determining that a signaling radio bearer is established, and the core network device does not need to perform signaling radio bearer configuration parameter exchange each time the access network device establishes the data radio bearer between the access network device and the user equipment. Therefore, a prior-art disadvantage that a relatively long time is consumed and efficiency is relatively low in a data radio bearer establishment process is resolved.

Based on the foregoing solution, as shown in FIG. 5, an embodiment of the present invention further provides a data radio bearer establishment system. The system includes the user equipment shown in FIG. 1A or FIG. 1B, the access network device shown in any one of FIG. 2A, FIG. 2B, FIG. 3A, or FIG. 3B, and the core network device shown in FIG. 4A or FIG. 4B.

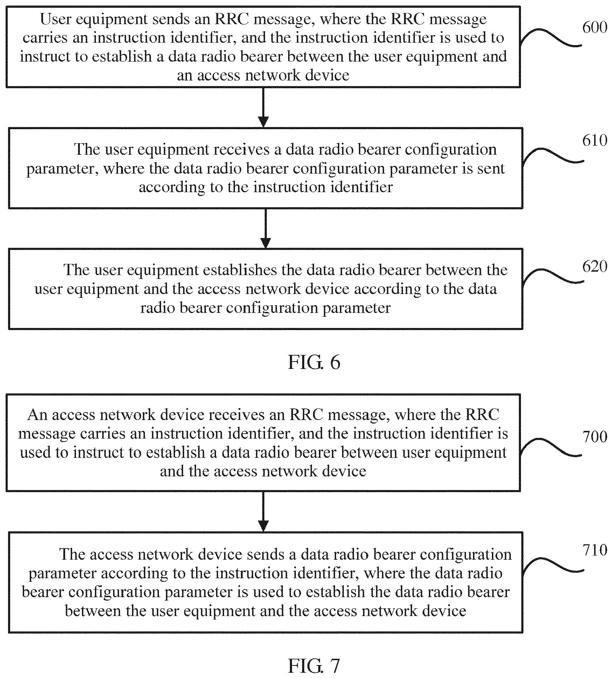

Based on the foregoing solution, as shown in FIG. 6, in an embodiment of the present invention, a data radio bearer establishment procedure is as follows.

Step 600: User equipment sends an RRC message, where the RRC message carries an instruction identifier, and the instruction identifier is used to instruct to establish a data radio bearer between the user equipment and an access network device.

Step 610: The user equipment receives a data radio bearer configuration parameter, where the data radio bearer configuration parameter is sent according to the instruction identifier.

Step 620: The user equipment establishes the data radio bearer between the user equipment and the access network device according to the data radio bearer configuration parameter.

In actual application, the data radio bearer is established according to a signaling radio bearer, and the signaling radio bearer is established according to a signaling radio bearer configuration parameter. Therefore, in this embodiment of the present invention, before the user equipment receives the data radio bearer configuration parameter, the procedure further includes the following operations:
determining, by the user equipment, a first signaling radio bearer configuration parameter; and
establishing, by the user equipment, a signaling radio bearer between the user equipment and the access network device according to the first signaling radio bearer configuration parameter.

In this case, optionally, the user equipment may receive the data radio bearer configuration parameter in the following manner:
receiving, by the user equipment, the data radio bearer configuration parameter by using the signaling radio bearer.

In this embodiment of the present invention, optionally, the user equipment may send the RRC message in the following manner:
sending, by the user equipment, the RRC message by using the signaling radio bearer.

Certainly, the RRC message that carries the instruction identifier may be sent by using the signaling radio bearer established according to the first signaling radio bearer configuration parameter, or may be sent by using another signaling radio bearer. This is not specifically limited herein.

In this embodiment of the present invention, the user equipment may determine the first signaling radio bearer configuration parameter in the following manner:
obtaining, by the user equipment, the first signaling radio bearer configuration parameter in a pre-write manner; or
receiving, by the user equipment, a system broadcast message, and obtaining the first signaling radio bearer configuration parameter from the system broadcast message; or
using, by the user equipment as the first signaling radio bearer configuration parameter, a signaling radio bearer configuration parameter used for previously establishing a signaling radio bearer; or
obtaining, by the user equipment, the first signaling radio bearer configuration parameter from a previously received RRC connection release message.

In this embodiment of the present invention, the system broadcast message may be sent by the access network device, or certainly may be sent by another device. This is not specifically limited herein.

In this embodiment of the present invention, the signaling radio bearer configuration parameter used for previously establishing a signaling radio bearer may be a signaling radio bearer configuration parameter used for establishing a signaling radio bearer last time, or may be a signaling radio bearer configuration parameter used for establishing a signaling radio bearer for last N times. N is greater than or equal to 2.

Likewise, the previously received RRC connection release message may be an RRC connection release message for a last-time RRC connection, or may be an RRC connection release message for last N times of RRC connections. N is greater than or equal to 2.

Certainly, the first signaling radio bearer configuration parameter may be carried in the RRC connection release message, or may be carried in another RRC message. For example, during the last-time RRC connection, an RRC connection reconfiguration message carries the first signaling radio bearer configuration parameter. In this case, the first signaling radio bearer configuration parameter may be obtained by using the RRC connection reconfiguration message. This is not specifically limited herein.

When obtaining the first signaling radio bearer configuration parameter in the foregoing manner, the user equipment obtains the first signaling radio bearer configuration parameter without performing dedicated signaling interaction each time the user equipment establishes the data radio bearer between the user equipment and the access network device. Therefore, data radio bearer establishment efficiency is improved, and signaling overheads are reduced.

Performance of the signaling radio bearer established according to the first signaling radio bearer configuration parameter may deteriorate. Therefore, to improve the performance of the signaling radio bearer, in this embodiment of the present invention, after the user equipment sends the RRC message, the procedure further includes the following operation:
receiving, by the user equipment, a second signaling radio bearer configuration parameter.

In this case, after the user equipment determines the first signaling radio bearer configuration parameter and establishes the signaling radio bearer, the procedure further includes the following operation:
changing, by the user equipment, the first signaling radio bearer configuration parameter according to the second signaling radio bearer configuration parameter.

In this way, performance of a signaling radio bearer established according to a changed first signaling radio bearer configuration parameter is higher than the performance of the signaling radio bearer established according to the unchanged first signaling radio bearer configuration parameter.

In this embodiment of the present invention, the user equipment may receive the second signaling radio bearer configuration parameter in the following manner:
receiving, by the user equipment, an RRC connection reconfiguration message, where the RRC connection reconfiguration message carries the second signaling radio bearer configuration parameter; and obtaining the second signaling radio bearer configuration parameter according to the RRC connection reconfiguration message.

In this embodiment of the present invention, optionally, an LCH (Logical Channel, logical channel) corresponding to the signaling radio bearer may be a CCCH (Common Control Channel, common control channel) or may be a DCCH (Dedicated Control Channel, dedicated control channel).

In this embodiment of the present invention, optionally, RLC (Radio Link Control, Radio Link Control) in a transparent mode or RLC in an unacknowledged mode is used for the signaling radio bearer, or further, to improve reliability of the RRC message, RLC in an acknowledged mode may be used for the signaling radio bearer.

In this embodiment of the present invention, optionally, when the LCH corresponding to the signaling radio bearer is the DCCH, the first signaling radio bearer configuration parameter and the second signaling radio bearer configuration parameter each include at least one of a PDCP (Packet Data Convergence Protocol, Packet Data Convergence Protocol) configuration parameter, an RLC configuration parameter, a MAC (Media Access Control, Media Access Control) configuration parameter, or a physical layer configuration parameter.

The PDCP configuration parameter may include one or a combination of a plurality of the following parameters:
duration of a discard timer, where a value of the duration may be 50 ms, 100 ms, or the like, and the duration indicates that a data packet needs to be discarded after the data packet is buffered at a PDCP layer for more than the duration; a PDCP PDU (Protocol Data Unit, protocol data unit) sequence number length, where a value of the length may be 5 bits, 7 bits, or the like; or information indicating whether a PDCP status report needs to be sent, if the RLC in the acknowledged mode is used.

The RLC configuration parameter may include one or a combination of a plurality of used RLC modes.

The used RLC modes may be classified into the following modes:
▪ Transparent mode
▪ Unacknowledged mode
   ◆ Uplink parameter
   - RLC packet sequence number length
   ◆ Downlink parameter
   - RLC packet sequence number length
   - Reordering timer
▪ Acknowledged mode
   ◆ Uplink parameter, where the uplink parameter may include:
   - a poll retransmission timer, used to determine a time between sending a poll and sending the poll again if no response is received after the poll is sent;
   - a poll PDU, indicating how many PDUs are sent before a poll needs to be sent;
   - a poll byte, indicating how many bytes are sent before a poll needs to be sent; and
   - the maximum number of retransmissions.
   ◆ Downlink parameter, where the downlink parameter may include:
   ◆ a reordering timer; and
   ◆ a status report prohibit timer.

The MAC configuration parameter may include one or a combination of a plurality of the following parameters:
the maximum number of HARQ (Hybrid Automatic Repeat reQuest, hybrid automatic repeat request) transmissions, a periodic BSR timer parameter, a retransmission BSR timer, or a DRX (Discontinuous Reception, discontinuous reception) configuration parameter.

In this embodiment of the present invention, an RLC SN number corresponding to the RRC message may be set to 0, so that the access network device can determine the RRC message.

In this embodiment of the present invention, if a cell in which the user equipment is currently located does not support a function of quickly establishing a data radio bearer, the user equipment cannot directly establish the data radio bearer after sending the RRC message that carries the instruction identifier. That is, after the user equipment sends the RRC message that carries the instruction identifier, the user equipment still first receives the signaling radio bearer configuration parameter and establishes the signaling radio bearer, and then receives the data radio bearer configuration parameter. Therefore, to avoid resource waste, before the user equipment sends the RRC message, the procedure further includes the following operation:
determining, by the user equipment, that the cell in which the user equipment is currently located supports the function of quickly establishing a data radio bearer.

That is, the user equipment sends, only after determining that the currently located cell supports the function of quickly establishing a data radio bearer, the RRC message that carries the instruction identifier, and if the user equipment determines that the currently located cell does not support the function of quickly establishing a data radio bearer, the user equipment sends an RRC message that does not carry an instruction identifier.

It may be understood that, that the cell supports the function of quickly establishing a data radio bearer may be specifically that user equipment that has the capability can directly request to establish a data radio bearer in the cell, without establishing a data radio bearer only after establishing a signaling radio bearer. Therefore, a delay and signaling overheads are reduced.

In this embodiment of the present invention, optionally, the user equipment may determine, in the following manner, whether the cell in which the user equipment is currently located supports the function of quickly establishing a data radio bearer:
obtaining, by the user equipment, a cell list, where the cell list includes one or more cells, and all cells in the cell list support the function of quickly establishing a data radio bearer.

Before sending the RRC message, the user equipment determines whether the current cell is a cell in the cell list. If the current cell is a cell in the cell list, the user equipment sends the RRC message; or if the current cell is not a cell in the cell list, the user equipment sends an RRC message that does not carry an instruction identifier.

Alternatively, optionally, the user equipment may determine, in the following manner, whether the cell in which the user equipment is currently located supports the function of quickly establishing a data radio bearer:
obtaining, by the user equipment, a broadcast message, where the broadcast message carries an indication indicating whether the current cell supports the function of quickly establishing a data radio bearer.

Before sending the RRC message, the user equipment determines whether the current cell supports the function of quickly establishing a data radio bearer. If the current cell supports the function, the user equipment sends the RRC message; or if the current cell is not a cell in a cell list, the user equipment sends an RRC message that does not carry an instruction identifier.

Optionally, the instruction identifier may be one or any combination of a NAS (Non-Access Stratum, non-access stratum) service request message, a cause value of quickly establishing a data bearer, or an LCID (Logical Channel Identify, logical channel identifier).

In this embodiment of the present invention, quantities of bytes that need to be added to the RRC message are different when the RRC message carries different instruction identifiers. When the instruction identifier is the NAS service request message, at least 4 bytes need to be additionally added to the RRC message. When the instruction identifier is the cause value of quickly establishing a data bearer, no byte needs to be additionally added to the RRC message.

In this embodiment of the present invention, a radio resource is also required to send the RRC message. Therefore, before the user equipment sends the RRC message, the procedure further includes the following operations:
sending, by the user equipment, a random access code;
receiving, by the user equipment, a random access response, where the random access response is sent according to the random access code, and the random access response carries a resource configuration parameter;
determining, by the user equipment, a radio resource according to the resource configuration parameter; and
sending, by the user equipment, the RRC message by using the radio resource.

In this embodiment of the present invention, a network side may determine, according to the random access code, whether the user equipment is to add the instruction identifier to the RRC message, so that radio resources of different sizes can be carried in the random access response to transmit specific RRC messages, and therefore, resource waste or resource insufficiency is avoided.

For example, there are two types of random access codes. If the user equipment sends a first type of random access code, it indicates that a user needs to send an RRC message that carries an instruction identifier; or if the user equipment sends a second type of random access code, a user needs to send an RRC message that does not carry an instruction identifier. If the user equipment sends different types of random access codes, the network side allocates radio resources of different sizes to the user equipment.

A resource is also required to send the random access code. Therefore, in this embodiment of the present invention, before the user equipment sends the random access code, the procedure further includes the following operations:
determining, by the user equipment, a PRACH (Physical Random Access Channel, physical random access channel) resource configuration parameter corresponding to the random access code;
determining, by the user equipment, a PRACH resource corresponding to the PRACH resource configuration parameter; and
sending, by the user equipment, the random access code by using the determined PRACH resource.

In this embodiment of the present invention, optionally, the user equipment may determine, in the following manner, the PRACH resource configuration parameter corresponding to the random access code:
receiving, by the user equipment, a system broadcast message, and obtaining the PRACH resource configuration parameter from the system broadcast message; or
obtaining, by the user equipment, the PRACH resource configuration parameter by using an RRC configuration message for a previous RRC connected state; or
obtaining, by the user equipment, the PRACH resource configuration parameter from a previously received RRC connection release message.

The system broadcast message may be sent by the access network device, or certainly may be sent by another device. This is not specifically limited herein.

In this embodiment of the present invention, the RRC configuration message for a previous RRC connected state may be an RRC configuration message for a last-time RRC connected state, or may be an RRC configuration message for last N times of RRC connected states. N is greater than or equal to 2.

In this embodiment of the present invention, the previously received RRC connection release message may be an RRC connection release message for a last-time RRC connection, or may be an RRC connection release message for last N times of RRC connections. N is greater than or equal to 2.

Certainly, the first signaling radio bearer configuration parameter may be carried in the RRC connection release message, or may be carried in another RRC message. This is not specifically limited herein.

It should be noted that the PRACH resource configuration parameter described herein is different from a PRACH resource configuration parameter in the prior art. After obtaining the PRACH resource configuration parameter, the user equipment determines that the to-be-sent RRC message carries the instruction identifier. If the user equipment obtains the PRACH resource configuration parameter in the prior art, the user equipment determines that a to-be-sent RRC message does not carry an instruction identifier.

In this embodiment of the present invention, the user equipment may encrypt the to-be-sent RRC message to improve security of the RRC message. An encryption process is a relatively common technology in the art, and is not described herein. In this embodiment of the present invention, the user equipment may receive the data radio bearer configuration parameter in the following manner:
receiving, by the user equipment, an RRC connection reconfiguration message, where the RRC connection reconfiguration message carries the data radio bearer configuration parameter; and obtaining the data radio bearer configuration parameter according to the RRC connection reconfiguration message.

In this embodiment of the present invention, optionally, the RRC message may be an RRC connection establishment request message.

In this embodiment of the present invention, the user equipment may establish one or more data radio bearers between the user equipment and the access network device according to the data radio bearer configuration parameter. This is not specifically limited herein.

In this embodiment, the RRC message carries the preset identifier. After sending the RRC message, the user equipment directly receives the data radio bearer configuration parameter, and establishes the data radio bearer according to the data radio bearer configuration parameter without performing signaling radio bearer configuration parameter exchange each time. Therefore, a prior-art disadvantage that a relatively long time is consumed and efficiency is relatively low in a data radio bearer establishment process is resolved.

Based on the foregoing solution, as shown in FIG. 7, in an embodiment of the present invention, another data radio bearer establishment procedure is as follows.

Step 700: An access network device receives an RRC message, where the RRC message carries an instruction identifier, and the instruction identifier is used to instruct to establish a data radio bearer between user equipment and the access network device.

Step 710: The access network device sends a data radio bearer configuration parameter according to the instruction identifier, where the data radio bearer configuration parameter is used to establish the data radio bearer between the user equipment and the access network device.

In this embodiment of the present invention, the access network device needs to generate the data radio bearer configuration parameter before sending the data radio bearer configuration parameter. In addition, a data radio bearer established according to QoS information has relatively high performance. Therefore, to improve performance of the established data radio bearer, in this embodiment of the present invention, after the access network device receives the RRC message, before the access network device sends the data radio bearer configuration parameter according to the instruction identifier, the procedure further includes the following operations:
receiving, by the access network device, QoS (Quality of Service, quality of service) information of the data radio bearer; and
generating, by the access network device, the data radio bearer configuration parameter according to the QoS information.

In this way, the data radio bearer configuration parameter is generated according to the QoS information, and the data radio bearer is generated according to the data radio bearer configuration parameter. Therefore, the performance of the established data radio bearer is improved.

In this embodiment of the present invention, the QoS information may be one or any combination of a delay requirement, a packet loss requirement, a rate requirement, or a priority requirement. Certainly, the QoS information is not limited to the foregoing manners.

In this embodiment of the present invention, the access network device may receive the QoS information of the data radio bearer in the following manner:
receiving, by the access network device, an initial context request message, where the initial context request message carries the QoS information; and obtaining the QoS information from the initial context request message.

In this embodiment of the present invention, optionally, the access network device may receive the QoS information of the data radio bearer in the following manner:
generating, by the access network device, an interface message according to the RRC message, where the interface message carries the instruction identifier;
sending, by the access network device, the interface message; and
receiving, by the access network device, the QoS information, where the QoS information is sent according to the interface message.

Optionally, the interface message may be an S1 interface message, or may be an X2 interface message. Certainly, the interface message may be another interface message according to different application scenarios or with development of communications technologies. This is not specifically limited herein.

In this embodiment of the present invention, the access network device may directly add the instruction identifier in the RRC message to the interface message, or may add, to the interface message, a processed instruction identifier that can also has a function of instructing to establish the data radio bearer between the user equipment and the access network device. This is not specifically limited herein.

In this embodiment of the present invention, before the access network device receives the RRC message, the procedure further includes the following operations:
sending, by the access network device, a system broadcast message, where the system broadcast carries a first signaling radio bearer configuration parameter, and the first signaling radio bearer configuration parameter is used to establish a signaling radio bearer between the user equipment and the access network device; and/or
sending, by the access network device, an RRC connection release message, where the RRC connection release message carries the first signaling radio bearer configuration parameter.

In this way, the user equipment establishes the data radio bearer without performing signaling radio bearer configuration parameter exchange by using dedicated signaling each time. Therefore, data radio bearer establishment efficiency is improved, and signaling overheads are reduced.

Certainly, alternatively, an RRC message other than the RRC connection release message may be sent.

Performance of the signaling radio bearer established according to the first signaling radio bearer configuration parameter may deteriorate. Therefore, to improve the performance of the signaling radio bearer, the first signaling radio bearer configuration parameter may be changed. Therefore, in this embodiment of the present invention, after the access network device receives the RRC message, the procedure further includes the following operation:
sending, by the access network device, a second signaling radio bearer configuration parameter.

In this case, the user equipment may change the first signaling radio bearer configuration parameter by using the second signaling radio bearer configuration parameter, and the user equipment may optimize the established signaling radio bearer according to a changed first signaling radio bearer configuration parameter, so that the performance of the established signaling radio bearer is improved.

In this embodiment of the present invention, the access network device may send the second signaling radio bearer configuration parameter in the following manner:
sending, by a core network device, an RRC connection reconfiguration message, where the RRC connection reconfiguration message carries the second signaling radio bearer configuration parameter.

In this embodiment of the present invention, an LCH corresponding to the signaling radio bearer may be a CCCH or a DCCH.

In this embodiment of the present invention, RLC in a transparent mode or RLC in an unacknowledged mode is used for the signaling radio bearer, or further, to improve reliability of the RRC message, RLC in an acknowledged mode may be used for the signaling radio bearer.

In this embodiment of the present invention, optionally, when the LCH corresponding to the signaling radio bearer is the DCCH, the first signaling radio bearer configuration parameter and the second signaling radio bearer configuration parameter each include at least one of a PDCP configuration parameter, an RLC configuration parameter, a MAC configuration parameter, or a physical layer configuration parameter.

The PDCP configuration parameter may include one or a combination of a plurality of the following parameters:
duration of a discard timer, where a value of the duration may be 50 ms, 100 ms, or the like, and the duration indicates that a data packet needs to be discarded after the data packet is buffered at a PDCP layer for more than the duration; a PDCP PDU sequence number length, where a value of the length may be 5 bits, 7 bits, or the like; or information indicating whether a PDCP status report needs to be sent, if the RLC in the acknowledged mode is used.

The RLC configuration parameter may include one or a combination of a plurality of used RLC modes.

The used RLC modes may be classified into the following modes:
▪ Transparent mode
▪ Unacknowledged mode
   ◆ Uplink parameter
   - RLC packet sequence number length
   ◆ Downlink parameter
   - RLC packet sequence number length
   - Reordering timer
▪ Acknowledged mode
   ◆ Uplink parameter, where the uplink parameter may include:
   - a poll retransmission timer, used to determine a time between sending a poll and sending the poll again if no response is received after the poll is sent;
   - a poll PDU, indicating how many PDUs are sent before a poll needs to be sent;
   - a poll byte, indicating how many bytes are sent before a poll needs to be sent; and
   - the maximum number of retransmissions.
   ◆ Downlink parameter, where the downlink parameter may include:
   ◆ a reordering timer; and
   ◆ a status report prohibit timer.

The MAC configuration parameter may include one or a combination of a plurality of the following parameters:
the maximum number of HARQ transmissions, a periodic BSR timer parameter, a retransmission BSR timer, or a DRX configuration parameter.

In this embodiment of the present invention, optionally, the instruction identifier is one or any combination of a NAS service request message, a cause value of quickly establishing a data bearer, or an LCID.

In this embodiment of the present invention, quantities of bytes that need to be added to the RRC message are different when the RRC message carries different instruction identifiers. When the instruction identifier is the NAS service request message, at least 4 bytes need to be additionally added to the RRC message. When the instruction identifier is the cause value of quickly establishing a data bearer, no byte needs to be additionally added to the RRC message.

In this embodiment of the present invention, a radio resource is also required to send the RRC message. Therefore, before the access network device receives the RRC message, the procedure further includes the following operations:
receiving, by the access network device, a random access code; and
sending, by the access network device, a random access response according to the random access code, where the random access response carries a resource configuration parameter.

In this embodiment of the present invention, a network side may determine, according to the random access code, whether the user equipment is to add the instruction identifier to the RRC message, so that radio resources of different sizes can be carried in the random access response to transmit specific RRC messages, and therefore, resource waste or resource insufficiency is avoided.

For example, there are two types of random access codes. If the user equipment sends a first type of random access code, it indicates that a user needs to send an RRC message that carries an instruction identifier; or if the user equipment sends a second type of random access code, a user needs to send an RRC message that does not carry an instruction identifier. If the user equipment sends different types of random access codes, the network side allocates radio resources of different sizes to the user equipment.

In this embodiment of the present invention, optionally, the RRC message may be an RRC connection establishment request message.

In this embodiment of the present invention, optionally, the access network device may send the data radio bearer configuration parameter in the following manner:
sending, by the access network device, an RRC connection reconfiguration message, where the RRC connection reconfiguration message carries the data radio bearer configuration parameter.

In this embodiment, the RRC message carries the preset identifier. After receiving the RRC message, the access network device directly sends the data radio bearer configuration parameter. The user equipment establishes the data radio bearer according to the data radio bearer configuration parameter. The access network device establishes the data radio bearer between the access network device and the user equipment without performing signaling radio bearer configuration parameter exchange each time. Therefore, a prior-art disadvantage that a relatively long time is consumed and efficiency is relatively low in a data radio bearer establishment process is resolved.

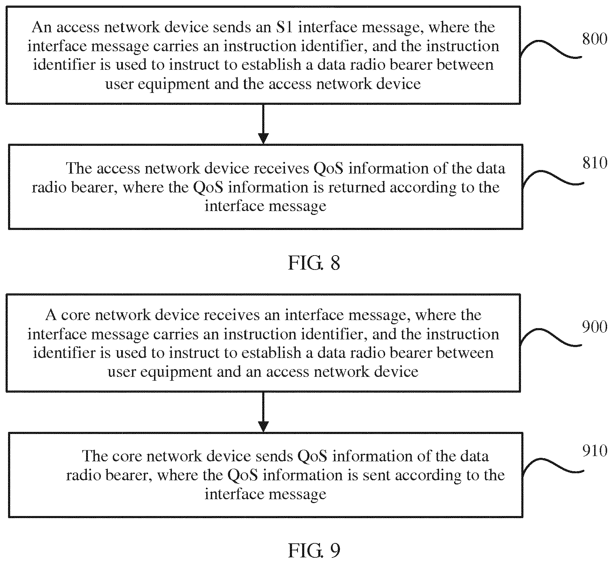

Based on the foregoing solution, as shown in FIG. 8, in an embodiment of the present invention, another data radio bearer establishment procedure is as follows.

Step 800: An access network device sends an interface message, where the interface message carries an instruction identifier, and the instruction identifier is used to instruct to establish a data radio bearer between user equipment and the access network device.

Step 810: The access network device receives QoS information of the data radio bearer, where the QoS information is returned according to the interface message.

Optionally, the interface message may be an S1 interface message, or may be an X2 interface message. Certainly, the interface message may be another interface message according to different application scenarios or with development of communications technologies. This is not specifically limited herein.

In this embodiment of the present invention, after the access network device receives the QoS information, the procedure further includes the following operation:
generating, by the access network device, a data radio bearer configuration parameter according to the QoS information, and sending the data radio bearer configuration parameter.

In this embodiment of the present invention, the QoS information may be one or any combination of a delay requirement, a packet loss requirement, a rate requirement, or a priority requirement. Certainly, the QoS information is not limited to the foregoing manners.

In this embodiment of the present invention, the access network device may receive the QoS information of the data radio bearer in the following manner:
receiving, by the access network device, an initial context request message, where the initial context request message carries the QoS information; and obtaining the QoS information from the initial context request message. In this embodiment of the present invention, the interface message is generated according to an RRC message sent by the user equipment. Therefore, in this embodiment of the present invention, before the access network device sends the interface message, the procedure further includes the following operations:
receiving, by the access network device, the RRC message, where the RRC message carries the instruction identifier; and
generating, by the access network device, the interface message according to the RRC message.

In this embodiment of the present invention, the access network device may directly add the instruction identifier in the RRC message to the interface message, or may add, to the interface message, a processed instruction identifier that can also has a function of instructing to establish the data radio bearer between the user equipment and the access network device. This is not specifically limited herein.

In this embodiment of the present invention, before the access network device receives the RRC message, the procedure further includes:
sending, by the access network device, a system broadcast message, where the system broadcast carries a first signaling radio bearer configuration parameter, and the first signaling radio bearer configuration parameter is used to establish a signaling radio bearer between the user equipment and the access network device; and/or
sending, by the access network device, an RRC connection release message, where the RRC connection release message carries the first signaling radio bearer configuration parameter.

Certainly, alternatively, an RRC message other than the RRC connection release message may be sent.

In this way, the user equipment establishes the data radio bearer without performing signaling radio bearer configuration parameter exchange by using dedicated signaling each time. Therefore, data radio bearer establishment efficiency is improved, and signaling overheads are reduced.

Performance of the signaling radio bearer established according to the first signaling radio bearer configuration parameter may deteriorate. Therefore, to improve the performance of the signaling radio bearer, to change the first signaling radio bearer configuration parameter, in this embodiment of the present invention, after the access network device receives the RRC message, the procedure further includes the following operation:
sending, by the access network device, a second signaling radio bearer configuration parameter.

In this case, the user equipment may change the first signaling radio bearer configuration parameter according to the second signaling radio bearer configuration parameter.

In this embodiment of the present invention, the access network device may send the second signaling radio bearer configuration parameter in the following manner:
sending, by a core network device, an RRC connection reconfiguration message, where the RRC connection reconfiguration message carries the second signaling radio bearer configuration parameter.

In this embodiment of the present invention, an LCH corresponding to the signaling radio bearer may be a CCCH or a DCCH.

In this embodiment of the present invention, RLC in a transparent mode or RLC in an unacknowledged mode may be used for the signaling radio bearer, or further, to improve reliability of the RRC message, RLC in an acknowledged mode may be used for the signaling radio bearer.

In this embodiment of the present invention, optionally, when the LCH corresponding to the signaling radio bearer is the DCCH, the first signaling radio bearer configuration parameter and the second signaling radio bearer configuration parameter each include at least one of a PDCP configuration parameter, an RLC configuration parameter, a MAC configuration parameter, or a physical layer configuration parameter.

The PDCP configuration parameter may include one or a combination of a plurality of the following parameters:
duration of a discard timer, where a value of the duration may be 50 ms, 100 ms, or the like, and the duration indicates that a data packet needs to be discarded after the data packet is buffered at a PDCP layer for more than the duration; a PDCP PDU sequence number length, where a value of the length may be 5 bits, 7 bits, or the like; or information indicating whether a PDCP status report needs to be sent, if the RLC in the acknowledged mode is used.

The RLC configuration parameter may include one or a combination of a plurality of used RLC modes.

The used RLC modes may be classified into the following modes:
▪ Transparent mode
▪ Unacknowledged mode
   ◆ Uplink parameter
   - RLC packet sequence number length
   ◆ Downlink parameter
   - RLC packet sequence number length
   - Reordering timer
▪ Acknowledged mode
   ◆ Uplink parameter, where the uplink parameter may include:
   - a poll retransmission timer, used to determine a time between sending a poll and sending the poll again if no response is received after the poll is sent;
   - a poll PDU, indicating how many PDUs are sent before a poll needs to be sent;
   - a poll byte, indicating how many bytes are sent before a poll needs to be sent; and
   - the maximum number of retransmissions.
   ◆ Downlink parameter, where the downlink parameter may include:
   ◆ a reordering timer; and
   ◆ a status report prohibit timer.

The MAC configuration parameter may include one or a combination of a plurality of the following parameters:
the maximum number of HARQ transmissions, a periodic BSR timer parameter, a retransmission BSR timer, or a DRX configuration parameter.

In this embodiment of the present invention, optionally, the instruction identifier is one or any combination of a NAS service request message, a cause value of quickly establishing a data bearer, or an LCID.

In this embodiment of the present invention, quantities of bytes that need to be added to the RRC message are different when the RRC message carries different instruction identifiers. When the instruction identifier is the NAS service request message, at least 4 bytes need to be additionally added to the RRC message. When the instruction identifier is the cause value of quickly establishing a data bearer, no byte needs to be additionally added to the RRC message.

In this embodiment of the present invention, a radio resource is also required to send the RRC message. Therefore, before the access network device receives the RRC message, the procedure further includes the following operations:
receiving, by the access network device, a random access code; and
sending, by the access network device, a random access response according to the random access code, where the random access response carries a resource configuration parameter.

In this case, when obtaining the resource configuration parameter, the user equipment may determine a radio resource, and send the RRC message by using the determined radio resource.

In this embodiment of the present invention, a network side may determine, according to the random access code, whether the user equipment is to add the instruction identifier to the RRC message, so that radio resources of different sizes can be carried in the random access response to transmit specific RRC messages, and therefore, resource waste or resource insufficiency is avoided.

For example, there are two types of random access codes. If the user equipment sends a first type of random access code, it indicates that a user needs to send an RRC message that carries an instruction identifier; or if the user equipment sends a second type of random access code, a user needs to send an RRC message that does not carry an instruction identifier. If the user equipment sends different types of random access codes, the network side allocates radio resources of different sizes to the user equipment.

In this embodiment of the present invention, optionally, the RRC message may be an RRC connection establishment request message.

In this embodiment of the present invention, optionally, the access network device may send the data radio bearer configuration parameter in the following manner:
sending, by the access network device, an RRC connection reconfiguration message, where the RRC connection reconfiguration message carries the data radio bearer configuration parameter.

In this embodiment, the interface message carries the preset identifier. After sending the interface message, the access network device directly receives the QoS information instead of receiving the QoS information only after receiving a signaling radio bearer configuration parameter, and the access network device establishes the data radio bearer between the access network device and the user equipment without performing signaling radio bearer configuration parameter exchange each time. Therefore, a prior-art disadvantage that a relatively long time is consumed and efficiency is relatively low in a data radio bearer establishment process is resolved. Based on the foregoing solution, as shown in FIG. 9, in an embodiment of the present invention, another data radio bearer establishment procedure is as follows.

Step 900: A core network device receives an interface message, where the interface message carries an instruction identifier, and the instruction identifier is used to instruct to establish a data radio bearer between user equipment and an access network device.

Step 910: The core network device sends QoS information of the data radio bearer, where the QoS information is sent according to the interface message.

Optionally, the interface message may be an S1 interface message, or may be an X2 interface message. Certainly, the interface message may be another interface message according to different application scenarios or with development of communications technologies. This is not specifically limited herein.

In this embodiment of the present invention, optionally, the instruction identifier is one or any combination of a NAS service request message, a cause value of quickly establishing a data bearer, or an LCID.

In this embodiment of the present invention, the QoS information may be one or any combination of a delay requirement, a packet loss requirement, a rate requirement, or a priority requirement. Certainly, the QoS information is not limited to the foregoing manners.

In this embodiment of the present invention, quantities of bytes that need to be added to an RRC message are different when the RRC message carries different instruction identifiers. When the instruction identifier is the NAS service request message, at least 4 bytes need to be additionally added to the RRC message. When the instruction identifier is the cause value of quickly establishing a data bearer, no byte needs to be additionally added to the RRC message.

In this embodiment of the present invention, the core network device may send the QoS information of the data radio bearer in the following manner:
sending, by the core network device, an initial context request message, where the initial context request message carries the QoS information; and obtaining the QoS information from the initial context request message.

In this embodiment, the interface message carries the preset identifier. After receiving the interface message, the core network device directly sends the QoS information instead of sending the QoS information only after sending a signaling radio bearer configuration parameter and determining that a signaling radio bearer is established, and the core network device does not need to perform signaling radio bearer configuration parameter exchange each time the access network device establishes the data radio bearer between the access network device and the user equipment. Therefore, a prior-art disadvantage that a relatively long time is consumed and efficiency is relatively low in a data radio bearer establishment process is resolved.

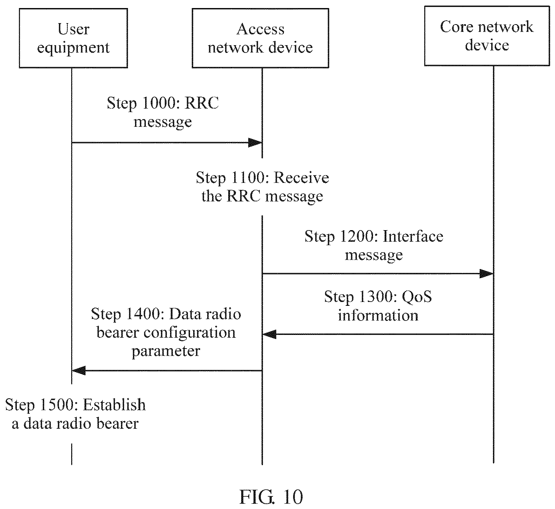

Based on the foregoing solution, as shown in FIG. 10, in an embodiment of the present invention, another data radio bearer establishment procedure is as follows.

Step 1000: User equipment sends a radio resource control RRC message to an access network device, where the RRC message carries an instruction identifier, and the instruction identifier is used to instruct to establish a data radio bearer between the user equipment and the access network device.

Step 1100: The access network device receives the RRC message, and generates an interface message according to the RRC message.

Step 1200: The access network device sends the interface message to a core network device, where the interface message carries the instruction identifier.

Step 1300: The core network device receives the interface message, and sends quality of service QoS information of the data radio bearer to the access network device according to the interface message.

Step 1400: The access network device generates a data radio bearer configuration parameter according to the QoS information, and sends the data radio bearer configuration parameter to the user equipment.

Step 1500: The user equipment receives the data radio bearer configuration parameter, and establishes the data radio bearer between the user equipment and the access network device according to the data radio bearer configuration parameter.

Optionally, the interface message may be an S1 interface message, or may be an X2 interface message. Certainly, the interface message may be another interface message according to different application scenarios or with development of communications technologies. This is not specifically limited herein.

Persons skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions may be stored in a computer readable memory that can instruct the computer or the another programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto the computer or the another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Obviously, persons skilled in the art can make various modifications and variations to the embodiments of the present invention without departing from the spirit and scope of the embodiments of the present invention. The present invention is intended to cover these modifications and variations provided that they fall within the scope of protection defined by the following claims and their equivalent technologies.

## Claims

1. User equipment, comprising:
a sending module, configured to send a radio resource control RRC message, wherein the RRC message carries an instruction identifier, and the instruction identifier is used to instruct to establish a data radio bearer between the user equipment and an access network device;
a receiving module, configured to receive a data radio bearer configuration parameter, wherein the data radio bearer configuration parameter is sent according to the instruction identifier; and
a processing module, configured to establish the data radio bearer between the user equipment and the access network device according to the data radio bearer configuration parameter.

2. The user equipment according to claim 1, wherein the user equipment further comprises a determining module, configured to determine a first signaling radio bearer configuration parameter, wherein
the processing module is further configured to establish a signaling radio bearer between the user equipment and the access network device according to the first signaling radio bearer configuration parameter; and
that the receiving module receives the data radio bearer configuration parameter is specifically:
receiving the data radio bearer configuration parameter by using the signaling radio bearer.

3. The user equipment according to claim 2, wherein that the sending module sends the RRC message is specifically:
sending the RRC message by using the signaling radio bearer.

4. The user equipment according to claim 2 or 3, wherein that the determining module determines the first signaling radio bearer configuration parameter is specifically:
obtaining the first signaling radio bearer configuration parameter in a pre-write manner; or
the receiving module is further configured to receive a system broadcast message, and the determining module obtains the first signaling radio bearer configuration parameter from the system broadcast message; or
using, as the first signaling radio bearer configuration parameter, a signaling radio bearer configuration parameter used for previously establishing a signaling radio bearer; or
obtaining the first signaling radio bearer configuration parameter from a previously received RRC connection release message.

5. The user equipment according to any one of claims 2 to 4, wherein the receiving module 11 is further configured to receive a second signaling radio bearer configuration parameter; and
the processing module is further configured to change the first signaling radio bearer configuration parameter according to the second signaling radio bearer configuration parameter.

6. The user equipment according to any one of claims 2 to 5, wherein a logical channel LCH corresponding to the signaling radio bearer is a common control channel CCCH or a dedicated control channel DCCH.

7. The user equipment according to claim 6, wherein Radio Link Control RLC in a transparent mode, or RLC in an unacknowledged mode, or RLC in an acknowledgement mode is used for the signaling radio bearer.

8. The user equipment according to claim 6 or 7, wherein when the LCH corresponding to the signaling radio bearer is the DCCH, the first signaling radio bearer configuration parameter and the second signaling radio bearer configuration parameter each comprise at least one of a Packet Data Convergence Protocol PDCP configuration parameter, an RLC configuration parameter, a Media Access Control MAC configuration parameter, or a physical layer configuration parameter.

9. The user equipment according to any one of claims 1 to 8, wherein the user equipment further comprises the determining module, configured to determine that a cell in which the user equipment is currently located supports a function of quickly establishing a data radio bearer.

10. The user equipment according to any one of claims 1 to 9, wherein the instruction identifier is one or any combination of a non-access stratum NAS service request message, a cause value of quickly establishing a data bearer, or a logical channel identifier LCID.

11. The user equipment according to any one of claims 1 to 10, wherein the sending module is further configured to send a random access code;
the receiving module is further configured to: receive a random access response, wherein the random access response is sent according to the random access code, and the random access response carries a resource configuration parameter; and determine a radio resource according to the resource configuration parameter; and
the sending module is further configured to send the RRC message by using the radio resource.

12. The user equipment according to claim 11, wherein the user equipment further comprises the determining module, configured to: determine a physical random access channel PRACH resource configuration parameter corresponding to the random access code, and determine a PRACH resource corresponding to the PRACH resource configuration parameter; and
the sending module is further configured to send the random access code by using the determined PRACH resource.

13. An access network device, comprising:
a receiving module, configured to receive a radio resource control RRC message, wherein the RRC message carries an instruction identifier, and the instruction identifier is used to instruct to establish a data radio bearer between user equipment and the access network device; and
a sending module, configured to send a data radio bearer configuration parameter according to the instruction identifier, wherein the data radio bearer configuration parameter is used to establish the data radio bearer between the user equipment and the access network device.

14. The access network device according to claim 13, wherein the receiving module is further configured to receive quality of service QoS information of the data radio bearer; and
the access network device further comprises a generation module, configured to generate the data radio bearer configuration parameter according to the QoS information.

15. The access network device according to claim 14, wherein that the receiving module receives the QoS information of the data radio bearer is specifically:
generating an interface message according to the RRC message, wherein the interface message carries the instruction identifier;
sending the interface message; and
receiving the QoS information, wherein the QoS information is sent according to the interface message.

16. The access network device according to any one of claims 13 to 15, wherein the sending module is further configured to: send a system broadcast message, wherein the system broadcast carries a first signaling radio bearer configuration parameter, and the first signaling radio bearer configuration parameter is used to establish a signaling radio bearer between the user equipment and the access network device; and/or
send an RRC connection release message, wherein the RRC connection release message carries the first signaling radio bearer configuration parameter.

17. The access network device according to any one of claims 13 to 16, wherein the sending module is further configured to send a second signaling radio bearer configuration parameter.

18. The access network device according to claim 16 or 17, wherein a logical channel LCH corresponding to the signaling radio bearer is a common control channel CCCH or a dedicated control channel DCCH.

19. The access network device according to claim 18, wherein Radio Link Control RLC in a transparent mode, or RLC in an unacknowledged mode, or RLC in an acknowledgement mode is used for the signaling radio bearer.

20. The access network device according to claim 18 or 19, wherein when the LCH corresponding to the signaling radio bearer is the DCCH, the first signaling radio bearer configuration parameter and the second signaling radio bearer configuration parameter each comprise at least one of a Packet Data Convergence Protocol PDCP configuration parameter, an RLC configuration parameter, a Media Access Control MAC configuration parameter, or a physical layer configuration parameter.

21. The access network device according to any one of claims 13 to 20, wherein the instruction identifier is one or any combination of a non-access stratum NAS service request message, a cause value of quickly establishing a data bearer, or a logical channel identifier LCID.

22. The access network device according to any one of claims 13 to 21, wherein the receiving module is further configured to receive a random access code; and
the sending module is further configured to send a random access response according to the random access code, wherein the access response carries a resource configuration parameter.

23. An access network device, comprising:
a sending module, configured to send an interface message, wherein the interface message carries an instruction identifier, and the instruction identifier is used to instruct to establish a data radio bearer between user equipment and the access network device; and
a receiving module, configured to receive quality of service QoS information of the data radio bearer, wherein the QoS information is returned according to the interface message.

24. The access network device according to claim 23, wherein the access network device further comprises a generation module, configured to generate a data radio bearer configuration parameter according to the QoS information; and
the sending module is further configured to send the data radio bearer configuration parameter.

25. The access network device according to claim 23 or 24, wherein the receiving module is further configured to receive an RRC message, wherein the RRC message carries the instruction identifier; and
the access network device further comprises the generation module, configured to generate the interface message according to the RRC message.

26. The access network device according to any one of claims 23 to 25, wherein the sending module is further configured to: send a system broadcast message, wherein the system broadcast carries a first signaling radio bearer configuration parameter, and the first signaling radio bearer configuration parameter is used to establish a signaling radio bearer between the user equipment and the access network device; and/or
send an RRC connection release message, wherein the RRC connection release message carries the first signaling radio bearer configuration parameter.

27. The access network device according to any one of claims 23 to 26, wherein the sending module is further configured to send a second signaling radio bearer configuration parameter.

28. The access network device according to claim 26 or 27, wherein a logical channel LCH corresponding to the signaling radio bearer is a common control channel CCCH or a dedicated control channel DCCH.

29. The access network device according to claim 28, wherein Radio Link Control RLC in a transparent mode, or RLC in an unacknowledged mode, or RLC in an acknowledgement mode is used for the signaling radio bearer.

30. The access network device according to claim 28 or 29, wherein when the LCH corresponding to the signaling radio bearer is the DCCH, the first signaling radio bearer configuration parameter and the second signaling radio bearer configuration parameter each comprise at least one of a Packet Data Convergence Protocol PDCP configuration parameter, an RLC configuration parameter, a Media Access Control MAC configuration parameter, or a physical layer configuration parameter.

31. The access network device according to any one of claims 23 to 30, wherein the instruction identifier is one or any combination of a non-access stratum NAS service request message, a cause value of quickly establishing a data bearer, or a logical channel identifier LCID.

32. The access network device according to any one of claims 23 to 31, wherein the receiving module is further configured to receive a random access code; and
the sending module is further configured to send a random access response according to the random access code, wherein the access response carries a resource configuration parameter.

33. A core network device, comprising:
a receiving module, configured to receive an interface message, wherein the interface message carries an instruction identifier, and the instruction identifier is used to instruct to establish a data radio bearer between user equipment and an access network device; and
a sending module, configured to send quality of service QoS information of the data radio bearer, wherein the QoS information is sent according to the interface message.

34. The core network device according to claim 33, wherein the instruction identifier is one or any combination of a non-access stratum NAS service request message, a cause value of quickly establishing a data bearer, or a logical channel identifier LCID.

35. A data radio bearer establishment method, comprising:
sending, by user equipment, a radio resource control RRC message, wherein the RRC message carries an instruction identifier, and the instruction identifier is used to instruct to establish a data radio bearer between the user equipment and an access network device;
receiving, by the user equipment, a data radio bearer configuration parameter, wherein the data radio bearer configuration parameter is sent according to the instruction identifier; and
establishing, by the user equipment, the data radio bearer between the user equipment and the access network device according to the data radio bearer configuration parameter.

36. The method according to claim 35, wherein before the receiving, by the user equipment, a data radio bearer configuration parameter, the method further comprises:
determining, by the user equipment, a first signaling radio bearer configuration parameter; and
establishing, by the user equipment, a signaling radio bearer between the user equipment and the access network device according to the first signaling radio bearer configuration parameter; and
the receiving, by the user equipment, a data radio bearer configuration parameter comprises:
receiving, by the user equipment, the data radio bearer configuration parameter by using the signaling radio bearer.

37. The method according to claim 36, wherein the sending, by user equipment, an RRC message comprises:
sending, by the user equipment, the RRC message by using the signaling radio bearer.

38. The method according to claim 36 or 37, wherein the determining, by the user equipment, a first signaling radio bearer configuration parameter comprises:
obtaining, by the user equipment, the first signaling radio bearer configuration parameter in a pre-write manner; or
receiving, by the user equipment, a system broadcast message, and obtaining the first signaling radio bearer configuration parameter from the system broadcast message; or
using, by the user equipment as the first signaling radio bearer configuration parameter, a signaling radio bearer configuration parameter used for previously establishing a signaling radio bearer; or
obtaining, by the user equipment, the first signaling radio bearer configuration parameter from a previously received RRC connection release message.

39. The method according to any one of claims 36 to 38, after the sending, by user equipment, an RRC message, further comprising:
receiving, by the user equipment, a second signaling radio bearer configuration parameter; and
after the user equipment determines the first signaling radio bearer configuration parameter and establishes the signaling radio bearer, further comprising:
changing, by the user equipment, the first signaling radio bearer configuration parameter according to the second signaling radio bearer configuration parameter.

40. The method according to any one of claims 36 to 39, wherein a logical channel LCH corresponding to the signaling radio bearer is a common control channel CCCH or a dedicated control channel DCCH.

41. The method according to claim 40, wherein Radio Link Control RLC in a transparent mode, or RLC in an unacknowledged mode, or RLC in an acknowledgement mode is used for the signaling radio bearer.

42. The method according to claim 40 or 41, wherein when the LCH corresponding to the signaling radio bearer is the DCCH, the first signaling radio bearer configuration parameter and the second signaling radio bearer configuration parameter each comprise at least one of a Packet Data Convergence Protocol PDCP configuration parameter, an RLC configuration parameter, a Media Access Control MAC configuration parameter, or a physical layer configuration parameter.

43. The method according to any one of claims 35 to 42, before the sending, by user equipment, an RRC message, further comprising:
determining, by the user equipment, that a cell in which the user equipment is currently located supports a function of quickly establishing a data radio bearer.

44. The method according to any one of claims 35 to 43, wherein the instruction identifier is one or any combination of a non-access stratum NAS service request message, a cause value of quickly establishing a data bearer, or a logical channel identifier LCID.

45. The method according to any one of claims 35 to 44, before the sending, by user equipment, an RRC message, further comprising:
sending, by the user equipment, a random access code;
receiving, by the user equipment, a random access response, wherein the random access response is sent according to the random access code, and the random access response carries a resource configuration parameter;
determining, by the user equipment, a radio resource according to the resource configuration parameter; and
sending, by the user equipment, the RRC message by using the radio resource.

46. The method according to claim 45, before the sending, by the user equipment, a random access code, further comprising:
determining, by the user equipment, a physical random access channel PRACH resource configuration parameter corresponding to the random access code;
determining, by the user equipment, a PRACH resource corresponding to the PRACH resource configuration parameter; and
sending, by the user equipment, the random access code by using the determined PRACH resource.

47. A data radio bearer establishment method, comprising:
receiving, by an access network device, a radio resource control RRC message, wherein the RRC message carries an instruction identifier, and the instruction identifier is used to instruct to establish a data radio bearer between user equipment and the access network device; and
sending, by the access network device, a data radio bearer configuration parameter according to the instruction identifier, wherein the data radio bearer configuration parameter is used to establish the data radio bearer between the user equipment and the access network device.

48. The method according to claim 47, after the receiving, by an access network device, an RRC message, before the sending, by the access network device, a data radio bearer configuration parameter according to the instruction identifier, further comprising:
receiving, by the access network device, quality of service QoS information of the data radio bearer; and
generating, by the access network device, the data radio bearer configuration parameter according to the QoS information.

49. The method according to claim 48, wherein the receiving, by the access network device, QoS information of the data radio bearer comprises:
generating, by the access network device, an interface message according to the RRC message, wherein the interface message carries the instruction identifier;
sending, by the access network device, the interface message; and
receiving, by the access network device, the QoS information, wherein the QoS information is sent according to the interface message.

50. The method according to any one of claims 47 to 49, before the receiving, by an access network device, an RRC message, further comprising:
sending, by the access network device, a system broadcast message, wherein the system broadcast carries a first signaling radio bearer configuration parameter, and the first signaling radio bearer configuration parameter is used to establish a signaling radio bearer between the user equipment and the access network device; and/or
sending, by the access network device, an RRC connection release message, wherein the RRC connection release message carries the first signaling radio bearer configuration parameter.

51. The method according to any one of claims 47 to 50, after the receiving, by an access network device, an RRC message, further comprising:
sending, by the access network device, a second signaling radio bearer configuration parameter.

52. The method according to claim 50 or 51, wherein a logical channel LCH corresponding to the signaling radio bearer is a common control channel CCCH or a dedicated control channel DCCH.

53. The method according to claim 52, wherein Radio Link Control RLC in a transparent mode, or RLC in an unacknowledged mode, or RLC in an acknowledgement mode is used for the signaling radio bearer.

54. The method according to claim 52 or 53, wherein when the LCH corresponding to the signaling radio bearer is the DCCH, the first signaling radio bearer configuration parameter and the second signaling radio bearer configuration parameter each comprise at least one of a Packet Data Convergence Protocol PDCP configuration parameter, an RLC configuration parameter, a Media Access Control MAC configuration parameter, or a physical layer configuration parameter.

55. The method according to any one of claims 47 to 54, wherein the instruction identifier is one or any combination of a non-access stratum NAS service request message, a cause value of quickly establishing a data bearer, or a logical channel identifier LCID.

56. The method according to any one of claims 47 to 55, before the receiving, by an access network device, an RRC message, further comprising:
receiving, by the access network device, a random access code; and
sending, by the access network device, a random access response according to the random access code, wherein the access response carries a resource configuration parameter.

57. A data radio bearer establishment method, comprising:
sending, by an access network device, an interface message, wherein the interface message carries an instruction identifier, and the instruction identifier is used to instruct to establish a data radio bearer between user equipment and the access network device; and
receiving, by the access network device, quality of service QoS information of the data radio bearer, wherein the QoS information is returned according to the interface message.

58. The method according to claim 57, after the receiving, by the access network device, QoS information, further comprising:
generating, by the access network device, a data radio bearer configuration parameter according to the QoS information, and sending the data radio bearer configuration parameter.

59. The method according to claim 57 or 58, before the sending, by an access network device, an interface message, further comprising:
receiving, by the access network device, an RRC message, wherein the RRC message carries the instruction identifier; and
generating, by the access network device, the interface message according to the RRC message.

60. The method according to any one of claims 57 to 59, before the receiving, by the access network device, an RRC message, further comprising:
sending, by the access network device, a system broadcast message, wherein the system broadcast carries a first signaling radio bearer configuration parameter, and the first signaling radio bearer configuration parameter is used to establish a signaling radio bearer between the user equipment and the access network device; and/or
sending, by the access network device, an RRC connection release message, wherein the RRC connection release message carries the first signaling radio bearer configuration parameter.

61. The method according to any one of claims 57 to 60, after the receiving, by the access network device, an RRC message, further comprising:
sending, by the access network device, a second signaling radio bearer configuration parameter.

62. The method according to claim 60 or 61, wherein a logical channel LCH corresponding to the signaling radio bearer is a common control channel CCCH or a dedicated control channel DCCH.

63. The method according to claim 62, wherein Radio Link Control RLC in a transparent mode, or RLC in an unacknowledged mode, or RLC in an acknowledgement mode is used for the signaling radio bearer.

64. The method according to claim 62 or 63, wherein when the LCH corresponding to the signaling radio bearer is the DCCH, the first signaling radio bearer configuration parameter and the second signaling radio bearer configuration parameter each comprise at least one of a Packet Data Convergence Protocol PDCP configuration parameter, an RLC configuration parameter, a Media Access Control MAC configuration parameter, or a physical layer configuration parameter.

65. The method according to any one of claims 57 to 64, wherein the instruction identifier is one or any combination of a non-access stratum NAS service request message, a cause value of quickly establishing a data bearer, or a logical channel identifier LCID.

66. The method according to any one of claims 57 to 65, before the receiving, by the access network device, an RRC message, further comprising:
receiving, by the access network device, a random access code; and
sending, by the access network device, a random access response according to the random access code, wherein the access response carries a resource configuration parameter.

67. A data radio bearer establishment method, comprising:
receiving, by a core network device, an interface message, wherein the interface message carries an instruction identifier, and the instruction identifier is used to instruct to establish a data radio bearer between user equipment and an access network device; and
sending, by the core network device, quality of service QoS information of the data radio bearer, wherein the QoS information is sent according to the interface message.

68. The method according to claim 67, wherein the instruction identifier is one or any combination of a non-access stratum NAS service request message, a cause value of quickly establishing a data bearer, or a logical channel identifier LCID.
